(19) Europäisches Patentamt
European Patent Office
Office européen des brevets

(11) **EP 2 025 688 B1**

(12) **EUROPÄISCHE PATENTSCHRIFT**

(45) Veröffentlichungstag und Bekanntmachung des Hinweises auf die Patenterteilung:
**20.08.2014 Patentblatt 2014/34**

(21) Anmeldenummer: **08011291.5**

(22) Anmeldetag: **20.06.2008**

(51) Int Cl.:
*C08F 2/22* *(2006.01)*   *C08F 218/04* *(2006.01)*
*C08F 218/02* *(2006.01)*   *C08F 263/02* *(2006.01)*
*C08F 263/04* *(2006.01)*   *C08L 31/02* *(2006.01)*
*C08L 31/04* *(2006.01)*

(54) **Polyvinylesterdispersionen, Verfahren zu deren Herstellung und deren Verwendung**

Polyvinyl ester dispersions, method for their manufacture and application thereof

Dispersions d'éther de polyvinyle, son procédé de fabrication et d'utilisation

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.07.2007 DE 102007033595**

(43) Veröffentlichungstag der Anmeldung:
**18.02.2009 Patentblatt 2009/08**

(73) Patentinhaber: **Celanese Emulsions GmbH**
**61476 Kronberg/Ts. (DE)**

(72) Erfinder: **Cabrera, Ivan Dr.**
**63303 Dreieich (DE)**

(74) Vertreter: **Ackermann, Joachim**
**Patentanwaltskanzlei Dr. Ackermann**
**Postfach 11 13 26**
**60048 Frankfurt am Main (DE)**

(56) Entgegenhaltungen:
**DE-A1-102005 032 194**

**Beschreibung**

Die vorliegende Erfindung betrifft mehrstufig hergestellte Polyvinylesterdispersionen, ein Mehrstufenverfahren zur Herstellung von Polyvinylesterdispersionen, sowie die Verwendung dieser Dispersionen als Bindemittel, insbesondere für Bautenschutzmittel, wie Dispersionsfarben. Die aus diesen Dispersionsfarben hergestellten Anstriche weisen eine Bewitterungsbeständigkeit auf, die den Dispersionsfarben enthaltend Binder auf Polyacrylatbasis vergleichbar ist.

Von Vinylestern und damit copolymerisierbaren Monomeren abgeleitete Polymerdispersionen sowie deren Verwendung als Bindemittel für Bautenschutzmittel sind bekannt und bereits mehrfach beschrieben worden. Solche Polymerdispersionen werden üblicherweise durch Emulsionspolymerisation hergestellt; die Polymerisation kann dabei ein- oder mehrstufig erfolgen. Bei den bislang bekannt gewordenen Polymerisationsverfahren werden Monomergemische in Gegenwart von Schutzkolloiden und/oder Emulgatoren durch Zugabe von Initiatoren durch radikalische Polymerisation umgesetzt. Die Zugabe der Monomeren erfolgt dabei vor oder während der radikalischen Polymerisation.

Manche Kombinationen von Monomeren sind schwer miteinander zu polymerisieren. Dieses drückt sich in deutlich voneinander unterschiedlichen Copolymerisationsparametern aus (vergl. P.A. Lowell, Emulsion Polymerization and Emulsion Polymers, Wiley, New York 1997, pp. 26-31). In solchen Fällen kann es vorkommen, dass sich keine Copolymere bilden, sondern unabhängig voneinander zwei getrennte Homopolymere entstehen. Aus dem Stand der Technik sind bereits mehrere Verfahren bekannt, um eigentlich schwer miteinander umzusetzende Monomere zu einer Ausbildung von Copolymeren zu veranlassen.

So beschreibt die EP-A-710,675 ein Verfahren zur Polymerisation von Monomeren, von denen mindestens eines eine schlechte Wasserlöslichkeit aufweist oder zur Polymerisation, bei der ein Polymer mit einer schlechten Wasserlöslichkeit entsteht. Das Verfahren beinhaltet den Einsatz eines Makromeren mit einer hydrophoben Kavität, beispielsweise eines Cyclodextrins, während der Polymerisation. In einer Variante des Verfahrens erfolgt die Copolymerisation in einem wässerigen System in Gegenwart dieses Makromeren, wobei das schlecht wasserlösliche Monomere zunächst in dem Makromeren komplexiert wird und anschließend die Polymerisation erfolgt, vorzugsweise in Gegenwart eines weiteren wasserlöslichen Monomeren.

In der EP-A-381,122 wird eine zweistufige Polymerisation zur Herstellung einer Vinylacetat-Copolymeremulsion beschrieben. Das Copolymere enthält mit Vinylacetat inkompatible Comonomere. Das Verfahren beinhaltet in einer ersten Stufe die Emulsionspolymerisation von Vinylacetat und gegebenenfalls weiteren Comonomeren bis zur praktisch vollständigen Umsetzung des Vinylacetats und in einer zweiten Stufe die Zugabe und Polymerisation eines zweiten, mit Vinylacetat unverträglichen Monomeren. Das Verfahren ist dadurch gekennzeichnet, dass während der zweiten Stufe kein weiterer Stabilisator zugegeben wird und dass die Copolymerisation der zweiten Stufe sofort nach Zugabe des unverträglichen Monomeren beginnt, ohne dass sich ein Verteilungsgleichgewicht zwischen dem unverträglichen Monomeren und dem Reaktionsprodukt der ersten Stufe einstellen kann. Die erhaltenen Mehrstufenpolymerisate zeichnen sich dadurch aus, dass deren Morphologie im wesentlichen der Morphologie (Teilchengröße und Polydispersität) der Teilchen der ersten Stufe entspricht und dass die Glasübergangstemperaturen des Polymeren der ersten Stufe beibehalten werden, ohne dass eine weitere Glasübergangstemperatur des Polymeren der zweiten Stufe festzustellen ist.

In der US-A-4,616,057 wird eine ein interpenetrierendes Netzwerk enthaltende Polymeremulsion beschrieben. Das Dokument beschreibt die mehrstufige Emulsionspolymerisation von Vinylacetat und einem damit copolymerisierbaren vernetzenden Monomer, wie N-Methylolacrylamid, mit damit schlecht oder gar nicht copolymerisierbaren Monomeren, wie Methylmethacrylat oder Styrol. Das Verfahren umfasst in der ersten Stufe die Herstellung eines ersten Emulsionspolymerisates. Zu diesem Produkt Stufe wird eine zweite Emulsion zugefügt, die ein vom Monomer der ersten Stufe unterschiedliches Monomer enthält und es wird abgewartet, bis sich ein Gleichgewicht eingestellt hat. Danach wird die zweite Stufe der Emulsionspolymerisation gestartet, und es bildet sich ein interpenetrierendes Netzwerk mit physikalisch voneinander unterscheidbaren Polymeren aus. In der Dispersion lassen sich unterschiedliche Glasübergangstemperaturen messen und Filme aus der Dispersion zeichnen sich im Vergleich zu Filmen aus Mischungen von Dispersionen der einzelnen Polymeren durch erhöhte Zugfestigkeiten, höhere Elastizitätsmoduli und verbesserte Schlagzähigkeiten aus. Bei der Nacharbeitung des aus US-A-4,616,057 bekannten Verfahrens hat sich herausgestellt, dass die beschriebenen Dispersionen vergleichsweise hohe Anteile an Koagulat aufweisen. Das vorbekannte Verfahren führt bei der Produktion zu einem erhöhten Aufwand, da mehrere Filterwechsel und längere Produktionszeiten erforderlich sind und da der Reaktor verunreinigt wird. Außerdem stört ein hoher Koagulatanteil den Einsatz der Dispersion. So sollten Binder für Dispersionsfarben möglichst frei von Koagulat sein. Außerdem enthalten die nach dem vorbekannten Verfahren erzeugten Dispersionen aufgrund ihrer Herstellungsweise vergleichsweise hohe Anteile an Emulgatoren. Insbesondere durch die Zugabe von Monomeremulsion in der zweiten Stufe tritt in der resultierenden Dispersion ein hoher Emulgatorgehalt auf, welcher die Wasserfestigkeit der aus diesen Dispersionen hergestellten Filme und Farben nachteilig beeinflusst.

EP-A-581,264 beschreibt Mischungen von Copolymeren bestehend im wesentlichen aus Vinylacetat-Ethylen-Copolymeren und ausgewählten Styrol- oder Acrylatcopolymeren mit einem vergleichsweise hohen Anteil an einpolymerisierter Acrylsäure oder an Maleinsäureanhydrid. Beschrieben werden unter anderem Dispersionen abgeleitet von Vinylacetat und -Ethylen, die mit Styrol oder ausgewählten Acrylaten sowie mit vergleichsweise hohen Mengen an Acrylsäure oder Maleinsäureanhydrid versetzt und anschließend einer Polymerisation unterzogen werden. Bedingt durch die hohen Säure(anhydrid)gehalte neigen die erhaltenen Blends oder Dispersionen zum Aufbau hoher Viskositäten.

DE 101 26 560 C1 beschreibt die Verwendung von Mischpolymerisaten von bestimmten Copolymeren, darunter auch Vinylester-Copolymeren, in Baustoffen. Die Copolymerisation erfolgt in zwei Stufen in Gegenwart von vergleichsweise großen Mengen an Schutzkolloid. Die Produkte eignen sich zur Herstellung von gut redispergierbaren Pulvern. Diese werden als weiteres Bindemittel in Baustoffen eingesetzt, welche weitere Bindemittel aus hydraulisch abbindenden Materialien enthalten.

Eine Aufgabe der vorliegenden Erfindung liegt in der Bereitstellung von mehrstufig hergestellten mindestens eine Polyvinylesterphase aufweisenden Polymer-dispersionen, deren Verfilmungen im Vergleich zu Verfilmungen aus den entsprechenden Monomergemischen durch einstufige Copolymerisation hergestellten Dispersionen eine verbesserte Zugfestigkeit auszeichnen, die weitgehend Koagulatfrei sind und die keinen Eintrag von Emulgatoren in der zweiten Stufe der Polymerisation erfordern.

Eine weitere Aufgabe der vorliegenden Erfindung liegt in der Bereitstellung eines verbesserten Verfahrens zur mehrstufigen Herstellung von Polyvinylester-dispersionen, wobei schwer miteinander zu copolymerisierende Monomere, wie Vinylester und (Meth)acrylate und/oder Vinylaromaten eingesetzt werden.

Es wurde nun in überraschender Weise gefunden, daß bei der Einhaltung bestimmter Verfahrensparameter bei der mehrstufigen Herstellung von Polyvinylesterdispersionen Produkte erhalten werden können, welche im Vergleich zu einstufig hergestellten Polyvinylesterdispersionen der gleichen Monomerzusammensetzung die oben genannten vorteilhaften Eigenschaften aufweisen.

Gegenstand der Erfindung sind Polyvinylesterdispersionen erhältlich durch die nachstehend definierte mehrstufige radikalische Emulsionspolymerisation von mindestens einem Vinylester einer gesättigten Carbonsäure und in der folgenden Stufe von mindestens einem sich davon unterscheidenden radikalisch polymerisierbaren Monomer ausgewählt aus der Gruppe der Vinylaromaten, der Ester von ethylenisch ungesättigten Mono- oder Dicarbonsäuren oder der Vinylester von geradkettigen oder verzweigten aliphatischen gesättigten Carbonsäuren der Kettenlänge $C_5$-$C_{18}$ in Gegenwart von Schutzkolloiden und/oder Emulgatoren. Die erfindungsgemäßen Polyvinylesterdispersionen zeichnen sich einerseits dadurch aus, dass die Zugfestigkeit der aus der mehrstufigen Polyvinylesterdispersion erzeugten Filme mindestens 10 %, vorzugsweise mindestens 20 % größer ist als die Zugfestigkeit von Filmen, die aus einstufig hergestellten Polyvinylesterdispersionen gleicher Monomerzusammensetzung erzeugt worden sind und zeichnen sich andererseits dadurch aus, dass diese einen Siebrückstand, gemessen mit einem 40 $\mu$m Sieb, von weniger als 0,05 Gew. %, vorzugsweise weniger als 0,02 Gew. %, besonders bevorzugt weniger als 0,008 Gew. % zeigen, bezogen auf die Dispersion.

Des weiteren sind die erfindungsgemäßen Polyvinylesterdispersionen dadurch gekennzeichnet, dass der Gehalt an einpolymerisierten Säuren und/oder Säureanhydriden 6 Gew. %, insbesondere 3 Gew. %, bezogen auf die Gesamtmonomermenge, nicht übersteigt.

Die Ermittlung des Siebrückstands erfolgt in Analogie zu DIN 53786. Dazu wird die Dispersion durch ein Sieb mit 40 $\mu$m Maschenweite gegeben. Der Siebrückstand wird dabei nach folgender Formel ermittelt:

$$\text{Siebrückstand (\%)} = [(G1 - G2) \times 100] / \text{Einwaage}$$

Dabei bedeuten

G1 das Gewicht des getrockneten Siebes mit Koagulat in g
G2 das Gewicht des getrockneten Siebes ohne Koagulat in g, und
Einwaage die Menge der Dispersion in g, welche durch das Sieb gegeben wurde.

Bevorzugt sind die oben definierten mehrstufig erzeugten Polyvinylesterdispersionen, bei denen der Kontaktwinkel zwischen Wasser und den aus der mehrstufigen Polyvinylesterdispersion erzeugten Filmen mindestens 10 %, vorzugsweise mindestens 20 %, größer ist als der Kontaktwinkel zwischen Wasser und Filmen, die aus einstufig hergestellten Polyvinylesterdispersionen gleicher Monomerzusammensetzung erzeugt worden sind.

Ebenfalls bevorzugt sind die oben definierten mehrstufig erzeugten Polyvinylesterdispersionen, die einen Gehalt an Emulgatoren von bis zu 5,0 Gew. %, besonders bevorzugt von bis zu 3,65 Gew. %, insbesondere von weniger als 1 Gew. % aufweisen, bezogen auf die Gesamtmasse an eingesetzten Monomeren. Ganz besonders bevorzugt sind die oben definierten mehrstufig erzeugten Polyvinylesterdispersionen, die keine oder bis zu 3,65 Gew. %, insbesondere bis zu 1 Gew. % Emulgatoren enthalten und die zusätzlich durch Schutzkolloide stabilisiert sind.

Ein weiterer Gegenstand der vorliegenden Erfindung ist ein mehrstufiges Verfahren zur Herstellung der erfindungsgemäßen Polyvinylesterdispersionen.

Das erfindungsgemäße Verfahren ist durch folgende Schritte gekennzeichnet:

i) Polymerisation von mindestens einem Vinylester einer gesättigten Carbonsäure und gegebenenfalls weiteren damit copolymerisierbaren Monomeren in Gegenwart von mindestens einem Emulgator und/oder mindestens einem Schutzkolloid bis zu einem Umsatz von mindestens 90 % der eingesetzten Monomeren,

ii) Zugabe von mindestens einem sich von dem in Schritt i) eingesetzten Vinylester unterscheidenden radikalisch polymerisierbaren Monomer ausgewählt aus der Gruppe der Vinylaromaten, der Ester von ethylenisch ungesättigten Mono- oder Dicarbonsäuren oder der Vinylester von geradkettigen oder verzweigten aliphatischen gesättigten Carbonsäuren der Kettenlänge $C_5$-$C_{18}$ in reiner Form oder in Form einer Lösung zum in Schritt i) erhaltenen Polymerisationsgemisch, und

iii) Zugabe von mindestens einem Initiator der radikalischen Polymerisation nach Beendigung der Zugabe des oder der Monomeren in Schritt ii), so dass das oder die in Schritt ii) zugesetzten Monomeren in Gegenwart der in Schritt i) erzeugten Dispersion polymerisiert werden,

mit der Maßgabe, dass der Gehalt an Monomeren mit Säuregruppen und/oder mit Säureanhydridgruppen 6 Gew. %, bezogen auf die Gesamtmonomermenge, nicht übersteigt.

Unter dem Begriff "in reiner Form" ist im Rahmen dieser Beschreibung zu verstehen, dass die Monomeren ohne weitere Zusätze dem Polymerisationsansatz zugegeben werden. Eine besondere Aufreinigung der Monomeren ist nicht erforderlich.

Es wird angenommen, dass durch die Zugabe der Monomeren in Schritt ii) unter Bedingungen, in denen im Polymerisationsgemisch überwiegend keine Polymerisationsreaktionen mehr ablaufen, und das Abwarten bis zum Neustart der Polymerisation in Schritt iii), sich ein Verteilungsgleichgewicht zwischen dem in Stufe ii) zugesetzten Monomeren und dem Reaktionsprodukt der Stufe i) einstellt. Die im Vergleich zu Wasser in Schritt ii) zugesetzten hydrophoben Monomeren diffundieren wahrscheinlich vollständig in die in Schritt i) hergestellten Polymerteilchen und werden beim Neustart der Polymerisation in diesen Teilchen polymerisiert. Das erfindungsgemäße Verfahren wird daher auch als Einschlusspolymerisation bezeichnet.

Der Neustart der Polymerisation in Schritt iii) kann unmittelbar nach der Zugabe des oder der Monomeren in Schritt ii) erfolgen oder das Polymerisationsgemisch wird noch eine Zeit stehen gelassen, beispielsweise 10 bis 60 Minuten, bevor der Initiator zugesetzt wird, um Schritt iii) zu starten.

In einer bevorzugten Ausführungsform kommt in Schritt i) und/oder in Schritt ii) mindestens ein ethylenisch ungesättigte Silangruppen enthaltendes Monomer und/oder mindestens eine ethylenisch ungesättigte Epoxidverbindung zum Einsatz.

In einer weiteren bevorzugten Ausführungsform beträgt der Gehalt an Schutzkolloid, bezogen auf den Gesamtmonomergehalt, 0 bis weniger als 1 Gew. %.

Die durch die erfindungsgemäße Einschlusspolymerisation hergestellten Teilchen sind größer als die Teilchen gleicher Monomerzusammensetzung hergestellt durch herkömmliche Emulsionspolymerisation. Typischerweise sind die mittleren Teilchengrößen der durch Einschlusspolymerisation herstellten Dispersionen mindestens 10 % größer als die mittleren Teilchengrößen von durch herkömmliche einstufige Emulsionspolymerisation hergestellten Dispersionen gleicher Monomerzusammensetzung.

Außerdem unterscheiden sich die Glasübergangstemperaturen der durch erfindungsgemäße Einschlusspolymerisation hergestellten Dispersionen von den Glasübergangstemperaturen von Dispersionen mit Teilchen gleicher Monomerzusammensetzung, die durch herkömmliche einstufige Emulsionspolymerisation hergestellt worden sind.

Die Glasübergangstemperaturen der erfindungsgemäßen Mehrstufenpolymerisate kann in weiten Bereichen variieren. Für typische erfindungsgemäße Copolymerisate bewegen sich diese im Bereich von -50°C bis +110°C, bevorzugt von -30°C bis +40°C, ermittelt mit Differential Scanning Calorimetrie bei einer Aufheizgeschwindigkeit von 10K/Minute. Die Glasübergangstemperaturen der Mehrstufenpolymerisate können vom Fachmann in an sich bekannter Weise durch Auswahl der Monomerkombinationen eingestellt werden.

Die zur Herstellung der erfindungsgemäßen Polyvinylesterdispersionen eingesetzten Monomeren sind an sich bekannt.

Zu den in Schritt i) bei der Herstellung der erfindungsgemäßen Dispersionen eingesetzten Vinylestern einer gesättigten Carbonsäure zählen Vinylester von geradkettigen und/oder verzweigten aliphatischen Carbonsäuren mit ein bis achtzehn Kohlenstoffatomen. Ferner können zusätzlich Vinylester von aromatischen Carbonsäuren verwendet werden.

Zu den bevorzugten Monomeren dieses Typs zählen Vinylformiat, Vinylacetat, Vinylpropionat, Vinylbutyrat, Vinylisobutyrat, Vinylpivalat, Vinyl-2-ethylhexanoat, Vinylester von gesättigten verzweigten Monocarbonsäuren mit 9 bis 11 Kohlenstoffatomen im Säurerest, Vinylester von längerkettigen gesättigten oder ungesättigten Fettsäuren, wie beispielsweise Vinyllaurat oder Vinylstearat sowie Vinylester der Benzoesäure und substituierter Derivate der Benzoesäure wie Vinyl-p-tert.-butylbenzoat. Unter diesen ist Vinylacetat besonders bevorzugt.

Die genannten Vinylester können bei der Herstellung der erfindungsgemäßen Dispersionen in Schritt i) einzeln verwendet werden oder bevorzugt im Gemisch mit anderen Monomeren vorliegen, die Vinylester oder keine Vinylester sein können. Der Anteil der Vinylester in Schritt i), bezogen auf die in diesem Schritt eingesetzte Gesamtmonomermenge, beträgt in der Regel mindestens 40 Gew.-%, vorzugsweise mindestens 70 Gew.-%.

Bei der Herstellung der erfindungsgemäßen Dispersionen können in Schritt i) gegebenenfalls weitere Monomere eingesetzt werden. Dabei handelt es sich um ethylenisch ungesättigte Comonomere, die mit Vinylestern gesättigter Carbonsäuren copolymerisiert werden können. Dabei kann es sich um Comonomere handeln, die sich einfach mit den Vinylestern copolymerisieren lassen; es sind aber auch Comonomere einsetzbar, die sich nur in geringen Mengen zusammen mit den Vinylestern copolymerisieren lassen. Der Fachmann wird in diesen Fällen die Mengen der einzelnen Copolymeren so wählen, dass die vorgelegten Comonomeren in der Copolymerisation verbraucht werden.

Bevorzugt gegebenenfalls in Schritt i) eingesetzte Comonomere sind ethylenisch ungesättigte aliphatische oder cycloaliphatische Kohlenwasserstoffe, insbesondere $\alpha$-Olefine mit 2-12 Kohlenstoffatomen, wie Ethylen, Propylen und/oder Butylen; sowie halogenierte ungesättigte aliphatische Kohlenwasserstoffe, beispielsweise Vinylchlorid, Vinylfluorid, Vinylidenchlorid, Vinylidenfluorid. Der Anteil dieser Comonomeren an der in Schritt i) eingesetzten Gesamtmonomermenge beträgt bis zu 50 Gew.-%, vorzugsweise bis zu 25 Gew.-%.

Weitere gegebenenfalls in Schritt i) eingesetzte Comonomere sind $\alpha,\beta$-ungesättigte Monocarbonsäuren, beispielsweise Acrylsäure, Methacrylsäure und/oder Itaconsäure. Weiterhin können $\alpha,\beta$-ungesättigte Dicarbonsäuren, beispielsweise Maleinsäure, Fumarsäure, Itaconsäure und/oder Citraconsäure, oder deren Anhydride eingesetzt werden. Der Anteil dieser Comonomeren an der in Schritt i) eingesetzten Gesamtmonomermenge beträgt bis zu 5 Gew.-%, vorzugsweise bis zu 3 Gew.-%.

Weitere bevorzugt gegebenenfalls in Schritt i) eingesetzte Comonomere sind ethylenisch ungesättigte Sulfonsäuren und/oder ethylenisch ungesättigte Phosphonsäuren bzw. deren Salze oder deren Anhydride, vorzugsweise Vinylsulfonsäure, Vinylphosphonsäure und/oder 2-Acrylamido-2-methyl-propansulfonsäure. Der Anteil dieser Comonomeren an der in Schritt i) eingesetzten Gesamtmonomermenge beträgt bis zu 5 Gew.-%, vorzugsweise bis zu 3 Gew.-%.

Weitere bevorzugt gegebenenfalls in Schritt i) eingesetzte Comonomere sind Ester von $\alpha,\beta$-ungesättigten Monocarbonsäuren und/oder Mono- oder vorzugsweise Diester von $\alpha,\beta$-ungesättigten Dicarbonsäuren mit primären, sekundären und/oder tertiären gesättigten einwertigen Alkoholen mit 1 bis 20 Kohlenstoffatomen. Dabei kann es sich beispielsweise um die Methyl-, Ethyl-, Propyl-, Butyl- oder die 2-Ethylhexylester der Acrylsäure, der Methacrylsäure und/oder der Itaconsäure bzw. um die entsprechenden Mono- oder insbesondere Diester der Maleinsäure, Fumarsäure oder Citraconsäure sowie um die Ester der genannten Mono- und/oder Dicarbonsäuren mit cycloaliphatischen oder polycyclischen Alkoholen sowie von Fettalkoholen handeln. Der Anteil dieser Comonomeren an der in Schritt i) eingesetzten Gesamtmonomermenge beträgt bis zu 25 Gew.-%, vorzugsweise bis zu 15 Gew.-%.

Weitere bevorzugt gegebenenfalls in Schritt i) eingesetzte Comonomere sind epoxyfunktionelle, ethylenisch ungesättigte Verbindungen, wie Glycidylmethacrylat, Glycidylacrylat und/oder Vinyl-epoxycyclohexan. Der Anteil dieser Comonomeren an der in Schritt i) eingesetzten Gesamtmonomermenge beträgt bis zu 10 Gew.-%, vorzugsweise bis zu 5 Gew.-%.

Weitere bevorzugt gegebenenfalls in Schritt i) eingesetzte Comonomere sind siliziumfunktionelle, ethylenisch ungesättigte Verbindungen, wie Acryloyloxy-alkyltri(alkoxy)- und Methacryloyloxyalkyltri(alkoxy)-Silane, Vinyltrialkoxysilane und/oder Vinylalkyldialkoxysilane. Der Anteil dieser Comonomeren an der in Schritt i) eingesetzten Gesamtmonomermenge beträgt bis zu 10 Gew.-%, vorzugsweise bis zu 5 Gew.-%.

In einer bevorzugten Variante der erfindungsgemäßen Mehrstufen-Polyvinylesterdispersionen wird neben dem Vinylester gesättigter Carbonsäuren mindestens ein ethylenisch ungesättigtes Silangruppen enthaltendes Comonomer und/oder mindestens eine ethylenisch ungesättigte Epoxidverbindung eingesetzt.

Weitere bevorzugt gegebenenfalls in Schritt i) eingesetzte Comonomere sind mehrfach ethylenisch ungesättigte, und damit vernetzend wirkende Comonomere, beispielsweise Diallylphthalat, Diallylmaleinat, Triallylcyanurat, Tetraallyloxyethan, Divinylbenzol, Butandiol-1,4-dimethacrylat, Triethylenglykoldimethacrylat, Divinyladipat, Allyl(meth)-acrylat, Vinylcrotonat, Methylenbisacrylamid, Hexandioldiacrylat, Pentaerythroldiacrylat und Trimethylolpropantriacrylat oder Gemische von zwei oder mehreren Verbindungen aus dieser Gruppe. Der Anteil dieser Comonomeren an der in Schritt i) eingesetzten Gesamtmonomermenge beträgt bis zu 10 Gew.-%, vorzugsweise bis zu 2 Gew. %.

Weitere bevorzugt gegebenenfalls in Schritt i) eingesetzte Comonomere sind hydroxyfunktionelle Ester ungesättigter Carbonsäuren, wie Hydroxyethyl-(meth)-acrylat, Hydroxypropyl(meth)acrylat sowie deren Addukte mit Ethylenoxid oder Propylenoxid. Der Anteil dieser Comonomeren an der in Schritt i) eingesetzten Gesamtmonomermenge beträgt bis zu 25 Gew.-%, vorzugsweise bis zu 15 Gew.-%.

Weitere bevorzugt gegebenenfalls in Schritt i) eingesetzte Comonomere sind vernetzbare Gruppen, wie Carbonylgruppen oder N-Methylolgruppen enthaltende ethylenisch ungesättigte Verbindungen. Beispiele dafür sind Diacetonacrylamid, Allylacetoacetat, Vinylacetoacetat, Acetoacetoxyethyl(meth)acrylat, N-Ethanol-(meth)acrylamid, N-Propanol(meth)acrylamid, (Meth)acrylamid, Allylcarbamat, Acrylnitril, die N-Methylolester, -alkylether oder Mannichbasen des N- Methylol-(meth)acrylamids oder N-Methylolallylcarbamats, Acrylamidoglykolsäure und/oder deren Salze, Acrylamidomethoxyessigsäuremethylester, N-(2,2-Dimethoxy-1-hydroxyethyl)acrylamid, N-Dimethylaminopropyl(meth)acrylamid, N-Methyl(meth)-acrylamid, N-Butyl(meth)acrylamid, N-Cyclohexyl(meth)acrylamid, N-Dodecyl(meth)-acrylamid, N-Benzyl(meth)acrylamid, p-Hydroxyphenyl(meth)acrylamid, N-(3-Hy-droxy-2,2-dimethylpropyl)methacrylamid, Ethylimidazolidonmethacrylat oder N-Vinylformamid, N-Vinylpyrrolidon. Der Anteil dieser Comonomere an der in Schritt i) eingesetzten Gesamtmonomermenge beträgt bis zu 10 Gew.-%, vorzugsweise bis zu 5 Gew.-%.

Der Anteil der neben den Vinylestern in Schritt i) eingesetzten sonstigen Comonomeren kann zusammengenommen bis zu 60 Gew.-% betragen.

In Schritt ii) des erfindungsgemäßen Verfahrens können die oben genannten Monomeren eingesetzt werden. Bei den im Einzelfall in Schritt ii) eingesetzten Monomeren unterscheidet sich mindestens eines der in Schritt ii) eingesetzten Monomeren von den in Schritt i) eingesetzten Monomeren.

Grundsätzlich können in Schritten i) und ii) des erfindungsgemäßen Verfahrens beliebige Kombinationen der oben genannten Monomeren eingesetzt werden, wobei in Schritt i) allerdings mindestens ein Vinylester einer gesättigten Carbonsäure zum Einsatz kommt, in Schritt ii) Vinylaromaten, Ester von ethylenisch ungesättigten Mono- oder Dicarbonsäuren oder Vinylester von geradkettigen oder verzweigten aliphatischen gesättigten Carbonsäuren der Kettenlänge $C_5$-$C_{18}$ eingesetzt werden, und wobei die Gesamtmenge der eingesetzten Monomeren mit Säuregruppen und/oder mit Anhydridgruppen 6 Gew. %, bezogen auf die Gesamtmonomermenge, nicht überschreiten darf.

Bei den in Schritt ii) einsetzbaren Monomerklassen handelt es sich also in der Regel um Vinylester von geradkettigen und/oder verzweigten aliphatischen Carbonsäuren mit ein bis achtzehn Kohlenstoffatomen, um Vinylester von aromatischen Carbonsäuren, um ethylenisch ungesättigte aliphatische oder cycloaliphatische Kohlenwasserstoffe, um Vinylaromaten, insbesondere um Styrol, $\alpha$-Methylstyrol, Vinyltoluol und/oder Vinylxylol, um halogenierte ungesättigte aliphatische Kohlenwasserstoffe, um $\alpha,\beta$-ungesättigte Mono- und/oder Dicarbonsäuren, um ethylenisch ungesättigte Sulfon- und/oder Phosphonsäuren bzw. deren Salze, um Ester von $\alpha,\beta$-ungesättigten Monocarbonsäuren mit primären, sekundären und/oder tertiären gesättigten einwertigen Alkoholen mit 1 bis 20 Kohlenstoffatomen, um Mono- oder vorzugsweise Diester von $\alpha,\beta$-ungesättigten Dicarbonsäuren mit primären, sekundären und/oder tertiären gesättigten einwertigen Alkoholen mit 1 bis 20 Kohlenstoffatomen, um epoxyfunktionelle, ethylenisch ungesättigte Verbindungen, um siliziumfunktionelle, ethylenisch ungesättigte Verbindungen, um mehrfach ethylenisch ungesättigte, und damit vernetzend wirkende Comonomere, um hydroxyfunktionelle Ester ungesättigter Carbonsäuren sowie um vernetzbare oder selbstvernetzende ethylenisch ungesättigte Comonomere,

Die Gewichtsverhältnisse der in den Schritten i) und ii) des erfindungsgemäßen Verfahrens eingesetzten Monomeren können in weiten Bereichen variiert werden, beispielsweise von 10 : 90 bis 90 : 10, bevorzugt 80 : 20 bis 20 : 80 und besonders bevorzugt 60 : 40 bis 40 : 60. Die im Einzelfall auszuwählenden Mengenverhältnisse werden von der Natur der einzelnen Monmeren sowie von den im Einzelfall gewünschten Eigenschaften abhängen und können vom Fachmann in an sich bekannter Weise ausgewählt werden.

Bevorzugt kommen bei der Herstellung der erfindungsgemäßen Dispersionen in den Schritten i) und ii) unterschiedliche Vinylester gesättigter Carbonsäuren zum Einsatz, ganz besonders bevorzugt wird in Schritt i) eine Kombination von mindestens einem Vinylester gesättigter Carbonsäuren mit mindestens einem $\alpha$-Olefin, insbesondere mit Ethylen, eingesetzt.

In einer weiteren bevorzugten Variante des erfindungsgemäßen Verfahrens kommen in Schritt ii) Monomere zum Einsatz, die sich nur schlecht mit Vinylestern gesättigter Carbonsäuren copolymerisieren lassen. Diese werden insbesondere ausgewählt aus der Gruppe der Vinylaromaten und/oder der Ester von ethylenisch ungesättigten Mono- oder Dicarbonsäuren, ganz besonders Styrol, Acrylate und/oder Methacrylate.

Überraschend wurde gefunden, dass sich diese an sich mit Vinylestern gesättigter Carbonsäuren schlecht oder fast gar nicht copolymerisierbaren Monomeren durch das erfindungsgemäße Verfahren in großen Mengen in die Polymerdispersion einbauen lassen. Es kann bislang allerdings nicht genau erklärt werden, in welcher Weise dieser Einbau erfolgt. Dieses scheint von der in Schritten i) und ii) eingesetzten Monomerkombination beeinflusst zu werden. Bei manchen Systemen scheinen Teilchen aus gepfropften Copolymeren zu entstehen; bei anderen Systemen hingegen wurden mehrmodale Teilchengrößenverteilungen beobachtet und es wurden Hinweise darauf gefunden, dass unterschiedliche Teilchen mit unterschiedlichem chemischem Aufbau entstehen. Gemeinsam ist allen diesen Dispersionen, dass deren Verfilmungen im Vergleich mit den in einem Schritt hergestellten Dispersionen aus gleichen Monomerkombinationen eine verbesserte Zugfestigkeit aufweisen, größere Kontaktwinkel gegen Wasser zeigen und dass nur einen sehr geringe Menge an Koagulat entsteht.

Besonders bevorzugt werden mehrstufig erzeugte Polyvinylesterdispersionen bei denen in Stufe i) Monomere der Typen A1, A2 und gegebenenfalls A4 und/oder gegebenenfalls A5 und/oder gegebenenfalls A6; oder Monomere der Typen A1, A3 und gegebenenfalls A4 und/oder gegebenenfalls A5 und/oder gegebenenfalls A6; oder Monomere der Typen A1, A2, A3 und gegebenenfalls A4 und/oder gegebenenfalls A5 und/oder gegebenenfalls A6 eingesetzt werden und bei denen in Stufe ii) Monomere der Typen A3 und/oder A7 eingesetzt werden.

Bei den Monomeren des Typs A1 handelt es sich um Vinylester von geradkettig oder verzweigten aliphatischen gesättigten Carbonsäuren der Kettenlänge $C_1$-$C_4$, beispielsweise um Vinylformiat, Vinylacetat, Vinylpropionat, Vinylbutyrat oder Vinylisobutyrat. Vinylacetat ist bevorzugt. Die Vinylester A1 können in der Polyvinylesterdispersion auch in Kombination von zwei oder mehreren davon nebeneinander vorliegen.

Der Anteil der Monomeren A1, gegebenenfalls in Kombination mit weiteren Comonomeren aus dieser Gruppe, beträgt 40 bis 100 Gew.-%, vorzugsweise 70 bis 90 Gew. %, bezogen auf die Gesamtmenge der in Schritt i) eingesetzten Monomeren.

Bei den Monomeren des Typs A2 handelt es sich um verzweigte oder geradkettige $\alpha$-Olefine mit 2 bis 8 C-Atomen, beispielsweise um Prop-1-en, But-1-en, Pent-1-en, Hex-1-en, Hept-1-en, Oct-1-en und insbesondere um Ethylen.

Der Anteil der Monomeren A2, gegebenenfalls in Kombination mit weiteren Comonomeren aus dieser Gruppe, beträgt 0 bis 45 Gew.-%, bevorzugt 5 bis 45 Gew.-%, besonders bevorzugt 8 bis 25 Gew. %, ganz besonders bevorzugt 10 bis 20 Gew.-%, bezogen auf die Gesamtmenge der in Schritt i) eingesetzten Monomeren.

Bei den Monomeren des Typs A3 handelt es sich um Vinylester von geradkettigen oder verzweigten aliphatischen gesättigten Carbonsäuren der Kettenlänge $C_5$-$C_{18}$, beispielsweise um Vinylester von $\alpha$-verzweigten Carbonsäuren mit 5 bis 11 Kohlenstoffatomen im Säurerest (®Versaticsäuren), die Vinylester der Pivalin-, 2-Ethylhexan-, Laurin-, Palmitin-, Myristin- und Stearinsäure. Vinylester von Versaticsäuren, insbesondere VeoVa® 9, VeoVa® 10 und VeoVa® 11, sind bevorzugt. Die Vinylester A3 können in der Polyvinylesterdispersion auch in Kombination von zwei oder mehreren davon nebeneinander vorliegen.

Der Anteil der Monomeren A3, gegebenenfalls in Kombination mit weiteren Comonomeren aus dieser Gruppe, beträgt 0 bis 60 Gew.-%, bevorzugt 2 bis 40 Gew.-%, besonders bevorzugt 4 bis 30 Gew. %, ganz besonders bevorzugt 5 bis 25 Gew.-%, bezogen auf die Gesamtmenge der in Schritt i) eingesetzten Monomeren.

Bei den Monomeren des Typs A4 handelt es sich um ethylenisch ungesättigte Silangruppen enthaltende Monomere, beispielsweise um Monomere der allgemeinen Formel $RSi(CH_3)_{0-2}(OR^1)_{3-1}$, wobei R die Bedeutung $CH_2{=}CR^2{-}(CH_2)_{0-1}$ oder $CH_2{=}CR^2CO_2{-}(CH_2)_{1-3}$ hat, $R^1$ ein unverzweigter oder verzweigter, gegebenenfalls substituierter Alkylrest mit 1 bis 12 C-Atomen ist, der gegebenenfalls durch eine Ethergruppe unterbrochen sein kann, und $R^2$ für H oder $CH_3$ steht. Anstelle oder ergänzend zu diesen Monomeren können als Monomere des Typs A4 auch ethylenisch ungesättigte Epoxidverbindungen, wie Glycidylmethacrylat oder Glycidylacrylat eingesetzt werden. Bevorzugt werden Kombinationen von ethylenisch ungesättigten Silangruppen enthaltenden Monomeren und ethylenisch ungesättigten Epoxidverbindungen eingesetzt.

Bevorzugte ethylenisch ungesättigte Silangruppen enthaltende Monomere des Typs A4 sind Silane der Formeln $CH_2{=}CR^2{-}(CH_2)_{0-1}Si(CH_3)_{0-1}(OR^1)_{3-2}$ und $CH_2{=}CR^2CO_2{-}(CH_2)_3Si(CH_3)_{0-1}(OR^1)_{3-2}$, wobei $R^1$ ein verzweigter oder unverzweigter Alkylrest mit 1 bis 8 C-Atomen ist und $R^2$ für H oder $CH_3$ steht.

Besonders bevorzugte Silane des Typs A4 sind Vinylmethyl-dimethoxy-silan, Vinylmethyl-diethoxy-silan, Vinylmethyl-di-n-propoxy-silan, Vinylmethyl-di-iso-propoxy-silan, Vinylmethyl-di-n-butoxy-silan, Vinylmethyl-di-sec.-butoxy-silan, Vinylmethyl-di-tert.-butoxy-silan, Vinylmethyl-di-(2-methoxyisopropyloxy)-silan und Vinylmethyl-dioctyloxy-silan.

Weitere Beispiele für bevorzugte Silane sind $\gamma$-(Meth)acryloxypropyl-tris-(2-methoxyethoxy)-silan, $\gamma$-(Meth)acryloxypropyl-tris-methoxy-silan, $\gamma$-(Meth)acryloxypropyl-tris-ethoxy-silan, $\gamma$-(Meth)acryloxypropyl-tris-n-propoxy-silan, $\gamma$-(Meth)acryloxypropyl-tris-iso-propoxy-silan, $\gamma$-(Meth)acryloxypropyl-tris-butoxy-silan, $\gamma$-Acryloxypropyl-tris-(2-methoxy-ethoxy)-silan, $\gamma$-Acryloxypropyl-tris-methoxy-silan, $\gamma$-Acryloxypropyl-tris-ethoxy-silan, $\gamma$-Acryloxypropyl-tris-n-propoxy-silan, $\gamma$-Acryloxypropyl-tris-iso-propoxy-silan, $\gamma$-Acryloxypropyl-tris-butoxy-silan, sowie Vinyl-tris-(2-methoxyethoxy)-silan, Vinyl-tris-methoxy-silan, Vinyl-tris-ethoxy-silan, Vinyl-tris-n-propoxy-silan, Vinyl-tris-iso-propoxy-silan und Vinyl-tris-butoxy-silan. Die genannten Silanverbindungen können gegebenenfalls auch in Form ihrer (Teil)hydrolysate eingesetzt werden.

Der Anteil der Monomeren A4, gegebenenfalls in Kombination mit weiteren Comonomeren aus dieser Gruppe, beträgt 0 bis 10 Gew.-%, bevorzugt 0,5 bis 5 Gew.-%, bezogen auf die Gesamtmenge der in Schritt i) eingesetzten Monomeren.

Bei den Monomeren des Typs A5 handelt es sich um ethylenisch ungesättigte Verbindungen, die mindestens eine stabilisierende nichtionische oder ionische Gruppe, vorzugsweise eine Säuregruppe, im Molekül aufweisen, die das Emulsionspolymer zusätzlich über polymergebundene funktionelle Gruppen und/oder Ladungen stabilisieren.

Als Comonomere A5 mit stabilisierenden nichtionischen Gruppen eignen sich insbesondere Ester von ethylenisch ungesättigten aliphatischen Mono- und/oder Dicarbonsäuren mit Polyalkylenglykolen, vorzugsweise mit Polyethylenglykolen und/oder Polypropylenglykolen, oder Ester von ethylenisch ungesättigten Carbonsäuren mit Aminoalkoholen, wie (Meth)acrylsäureester von Aminoalkoholen, beispielsweise von Diethylaminoethanol, und/oder (Meth)acrylsäureester mit Dimethylaminoethanol, sowie (Meth)acrylsäureester mit zweiwertigen aliphatischen Alkoholen der Kettenlänge $C_2$-$C_{18}$, bei denen nur eine Alkoholgruppe verestert ist. Ferner eignen sich Amide von ethylenisch ungesättigten Carbonsäuren, wie Amide der Acryl- und Methacrylsäure und N-Methylolamide der Acryl- und Methacrylsäure sowie deren Ether. Eine weitere Gruppe dieser Monomeren sind N-Vinylamide einschließlich der N-Vinyllactame, beispielsweise Vinylpyrrolidon oder N-Vinyl-N-methylacetamid.

Als Comonomere A5 mit stabilisierenden ionischen Gruppen eignen sich ethylenisch ungesättigte Carbonsäuren oder Sulfonsäuren, die ein- oder zwei Carboxylgruppen oder eine Sulfonsäuregruppe aufweisen. Anstelle der freien Säuren können auch deren Salze, vorzugsweise Alkali- oder Ammoniumsalze eingesetzt werden.

Beispiele dafür sind Acrylsäure, Methacrylsäure, Crotonsäure, Maleinsäure, Fumarsäure, Itaconsäure, Vinylsulfonsäure, Styrolsulfonsäure, Halbester der Maleinsäure, der Fumarsäure und/oder der Itaconsäure mit einwertigen aliphatischen gesättigten Alkoholen der Kettenlänge $C_1$-$C_{18}$ sowie deren Alkali- und Ammoniumsalze oder (Meth)acrylsäureester von Sulfoalkanolen, beispielsweise Natrium-2-sulfoethylmethacrylat.

Besonders bevorzugte Comonomere des Typs A5 sind Acrylsäure, Methacrylsäure, Crotonsäure, Itaconsäure und/oder Vinylsulfonsäure.

Die Menge der gegebenenfalls vorhandenen weiteren Comonomeren A5, gegebenenfalls in Kombination mit weiteren Comonomeren aus dieser Monomergruppe, beträgt bis zu 5 Gew.-% , vorzugsweise bis zu 3 Gew.-%, bezogen auf die Gesamtmenge der in Schritt i) eingesetzten Monomeren.

Bei den Monomeren des Typs A6 handelt es sich um beliebige weitere ethylenisch ungesättigte Verbindungen, die nicht zu den Monomeren der Typen A1 bis A5 zählen und die mit den Monomeren der Typen A1 bis A5 gut oder weniger gut copolymerisierbar sind. Beispiele für Monomere des Typs A6 sind Ester gesättigte aliphatischer Monocarbonsäuren mit einwertigen ungesättigten Alkoholen der Kettenlänge $C_3$-$C_{18}$, Ester ethylenisch ungesättigter Mono- oder Dicarbonsäuren, insbesondere von Acrylsäure und/oder Methacrylsäure, mit einwertigen aliphatischen gesättigten Alkoholen, halogenierte Olefine, wie Vinylchlorid, Vinylidenchlorid und/oder Tetrafluorethylen; ethylenisch ungesättigte Nitrile, wie Acrylnitril und/oder Methacrylnitril; mehrfach ethylenisch ungesättigte gegebenenfalls halogenierte Kohlenwasserstoffe, wie Butadien, 2-Chlorbutadien, 2,3-Dichlorbutadien und/oder Isopren; $C_9$-$C_{16}$ alpha-Olefine; Vinylaromaten, wie Styrol; Vinylether von einwertigen aliphatischen gesättigten Alkoholen der Kettenlänge $C_1$-$C_{18}$; Divinyl- und/oder Diallylester von gesättigten und ungesättigten aliphatischen Dicarbonsäuren der Kettenlänge $C_3$-$C_{18}$; Vinyl- und Allylester der Acrylsäure und Crotonsäure; sowie Triallylcyanurat.

Die Menge der gegebenenfalls vorhandenen weiteren Comonomeren A6, gegebenenfalls in Kombination mit weiteren Comonomeren aus dieser Monomergruppe, beträgt typischerweise bis zu 10 Gew.-% , vorzugsweise bis zu 8 Gew.-%, bezogen auf die gesamte in Schritt i) eingesetzten Monomeren.

Bei den Monomeren des Typs A7 handelt es sich um eine Untergruppe der Monomeren des Typs A6, welche in Schritt ii) des erfindungsgemäßen Verfahrens eingesetzt werden können. Monomere des Typs A7 sind dadurch gekennzeichnet, dass diese sich mit Vinylestern von gesättigten Carbonsäuren nur schwierig copolymerisieren lassen. Zu den Monomeren des Typs A7 zählen Ester ethylenisch ungesättigter Monocarbonsäuren mit einwertigen aliphatischen gesättigten Alkoholen, Diester ethylenisch ungesättigter Dicarbonsäuren mit einwertigen aliphatischen gesättigten Alkoholen und/oder Vinylaromaten.

Die Monomeren des Typs A7 werden in Schritt ii) des erfindungsgemäßen Verfahrens bevorzugt allein oder in der Form von Gemischen aus Monomeren dieser Gruppe eingesetzt, gegebenenfalls in Kombination mit Monomeren der Typen A4 und/oder A5.

In einer weiteren bevorzugten Variante des erfindungsgemäßen Verfahren werden in Schritt ii) die Monomeren des Typs A3 allein oder in der Form von Gemischen aus Monomeren dieser Gruppe eingesetzt, gegebenenfalls in Kombination mit Monomeren der Typen A4 und/oder A5.

Besonders bevorzugt werden Polyvinylesterdispersionen enthaltend ein durch mehrstufige Copolymerisation erzeugtes Polymer mit Struktureinheiten, die sich von Vinylestern von $C_5$-$C_{18}$-Carbonsäuren, Acrylaten, Methacrylaten, Acrylamiden, Methacrylamiden, Bisestern der Maleinsäure mit $C_1$-$C_{18}$-Alkoholen, Bisestern der Fumarsäure mit $C_1$-$C_{18}$-Alkoholen und/oder Vinylaromaten ableiten, besonders bevorzugt von Vinylestern von $C_5$-$C_{18}$-Carbonsäuren, Estern der Acrylsäure und/oder der Methacrylsäure mit $C_1$-$C_{18}$-Alkoholen, Styrol und/oder $\alpha$-Methylstyrol.

Ebenfalls besonders bevorzugt werden Polyvinylesterdispersionen enthaltend ein durch mehrstufige Copolymerisation erzeugtes Polymer mit Struktureinheiten, die sich von Vinylestern von geradkettigen oder verzweigten $C_1$-$C_{18}$-Carbonsäuren ableiten, vorzugsweise von Vinylacetat und gegebenenfalls von weiteren Vinylestern von verzweigten und gesättigten $C_5$-$C_{12}$-Carbonsäuren und/oder von $\alpha$-Olefinen, ganz besonders bevorzugt von Vinylacetat und Ethylen.

Ganz besonders werden Polyvinylesterdispersionen bevorzugt enthaltend ein oder mehrere durch mehrstufige Copolymerisation erzeugte Polymere mit Struktureinheiten, die sich von Vinylacetat und Ethylen ableiten, sowie von Acrylat und/oder Methacrylat und/oder Vinylester einer verzweigten und gesättigten $C_5$-$C_{12}$-Carbonsäure abgeleitete Struktureinheiten.

Ebenfalls ganz besonders bevorzugt werden Polyvinylesterdispersionen enthaltend ein oder mehrere durch mehrstufige Copolymerisation erzeugte Polymere mit Struktureinheiten, die sich von mindestens einem Vinylester einer verzweigten und gesättigten $C_1$-$C_{18}$-Carbonsäure ableiten sowie von mindestens einem Vinylaromaten.

Ebenfalls ganz besonders bevorzugt werden Polyvinylesterdispersionen enthaltend ein oder mehrere durch mehrstufige Copolymerisation erzeugte Polymere mit Struktureinheiten, die sich ableiten von mindestens einem Monomeren ausgewählt aus der Gruppe der ethylenisch ungesättigten Silangruppen enthaltenden Monomeren, der ethylenisch ungesättigten Epoxidgruppen enthaltenden Monomeren, der ethylenisch ungesättigten Carbonsäure-, Sulfonsäure-Phosphorsäure- oder Phosphonsäuregruppen enthaltenden Monomeren oder deren Salzen, oder der Gemische von mindestens zwei dieser Monomeren.

Die erfindungsgemäßen Polyvinylesterdispersionen enthalten mindestens ein Schutzkolloid und/oder enthalten mindestens einen Emulgator. Vorzugsweise sind nur Schutzkolloid oder Schutzkolloid und bis zu 3,65 Gew. % an Emulgator enthalten.

Als Schutzkolloid, also als polymerer Stabilisator, eignen sich Methylcellulosen, Hydroxyethyl- und Propylcellulosen sowie Natriumcarboxymethylcellulose, Gelatine, Kasein, Stärke, Gummi arabicum, Hydroxyethylstärke und Natriumalginat.

Das bevorzugte Schutzkolloid ist Polyvinylalkohol. Geeigneter Polyvinylalkohol besitzt Hydrolysegrade von 60 bis 100 mol-% und Viskositäten der 4 %igen wässrigen Lösungen bei 20 °C von 2 - 70 mPa*s, insbesondere 30 bis 70 mPa*s.

Die genannten Schutzkolloide können selbstverständlich auch in Form von Gemischen verwendet werden.

Werden Schutzkolloide eingesetzt, so beträgt deren Menge, bezogen auf die Gesamtmenge der eingesetzten Monomeren, typischerweise 0,1 bis 15 Gewichtsteile, vorzugsweise 0,3 bis 5 Gewichtsteile.

In einer bevorzugten Variante enthalten die erfindungsgemäßen PolyvinylesterDispersionen überhaupt kein Schutzkolloid oder die Menge an Schutzkolloid, bezogen auf die Gesamtmenge der eingesetzten Monomeren, beträgt weniger als 1 Gew. %, besonders bevorzugt weniger als 0,7 Gew. %.

Als Emulgatoren werden in der Regel nichtionische Emulgatoren oder Kombinationen von nichtionischen mit ionischen Emulgatoren eingesetzt.

Beispiele für nichtionische Emulgatoren sind Acyl-, Alkyl-, Oleyl- und Alkylaryloxethylate. Diese Produkte sind beispielsweise im Handel unter der Bezeichnung Genapol® oder Lutensol® erhältlich. Hierunter fallen beispielsweise ethoxilierte Mono-, Di- und Tri-Alkylphenole (EO-Grad: 3 bis 50, Alkylsubstituentenrest: $C_4$ bis $C_{12}$) sowie ethoxilierte Fettalkohole (EO-Grad: 3 bis 80; Alkylrest: $C_8$ bis $C_{36}$), speziell $C_{12}$-$C_{14}$-Fettalkohol(3-8)ethoxilate, $C_{13}C_{15}$-Oxoalkohol(3-30)ethoxilate, $C_{16}C_{18}$-Fettalkohol(11-80)ethoxilate, $C_{10}$-Oxoalkohol(3-11)ethoxilate, $C_{13}$-Oxoalkohol(3-20)ethoxilate, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, die Polyethylenoxid(4-20)-Ether von Oleylalkohol sowie die Polyethenoxid(4-20)-Ether von Nonylphenol. Besonders geeignet sind die Polyethylenoxid(4-20)-Ether von Fettalkoholen, insbesondere von Oleylalkohol.

Werden nichtionische Emulgatoren eingesetzt, so beträgt deren Menge, bezogen auf die Gesamtmenge der eingesetzten Monomeren, typischerweise 0,05 bis 10 Gewichtsteile, vorzugsweise 0,05 bis 5,0 Gewichtsteile besonders bevorzugt 0,05 bis 3,65 Gewichtsteile und ganz besonders bevorzugt 0,1 bis 1 Gewichtsteile. Es lassen sich auch Gemische von nichtionischen Emulgatoren einsetzen.

Anstelle von oder zusätzlich zu nichtionischen Emulgatoren können ionische Emulgatoren, vorzugsweise anionische Emulgatoren verwendet werden. Beispielhaft genannt seien Natrium-, Kalium- und Ammoniumsalze von geradkettigen aliphatischen Carbonsäuren der Kettenlänge $C_{12}$-$C_{20}$, Natriumhydroxyoctadecansulfonat, Natrium-, Kalium- und Ammoniumsalze von Hydroxyfettsäuren der Kettenlänge $C_{12}$-$C_{20}$ und deren Sulfierungs- und/oder Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate Dimethyl-dialkyl($C_8$-$C_{18}$)-ammoniumchlorid, und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylen-glykolethern von einwertigen aliphatischen Alkoholen der Kettenlänge $C_{10}$-$C_{12}$ (Di-Natriumsalz), Sulfobernstein-säure-4-Ester mit Polyethylenglykolnonylphenylether (Di-Natriumsalz), Sulfobernsteinsäure-bis-cyclohexylester (Natriumsalz), Ligninsulfonsäure sowie deren Calcium-, Magnesium-, Natrium- und Ammoniumsalze, Harzsäuren, hydrierte und dehydrierte Harzsäuren sowie deren Alkalisalze, dodecyliertes Diphenylether-disulfonsaures Natrium sowie Natriumlaurylsulfat, oder ethoxyliertes Natriumlauryl-ethersulfat (EO-Grad 3). Es lassen sich auch Gemische von ionischen Emulgatoren einsetzen.

Werden ionische Emulgatoren eingesetzt, so beträgt deren Menge, bezogen auf die die Gesamtmenge der eingesetzten Monomeren, typischerweise 0,05 bis 10 Gewichtsteile, vorzugsweise 0,05 bis 5,0 Gewichtsteile besonders bevorzugt 0,05 bis 3,65 Gewichtsteile und ganz besonders bevorzugt 0,1 bis 1 Gewichtsteile. Es lassen sich auch Gemische von ionischen Emulgatoren einsetzen.

Bei der Verwendung von Emulgatoren beträgt deren Gesamtmenge, bezogen auf die Gesamtmenge der eingesetzten Monomeren, typischerweise 0,05 bis 10 Gewichtsteile, vorzugsweise 0,05 bis 5,0 Gewichtsteile besonders bevorzugt 0,05 bis 3,65 Gewichtsteile und ganz besonders bevorzugt 0,1 bis 1 Gewichtsteile.

Die erfindungsgemäßen wässrigen Polyvinylesterdispersionen besitzen typischerweise Feststoffgehalte von 20 bis 70 Gew.-%, vorzugsweise 30 bis 65 Gew.-%, und besonders bevorzugt 40 bis 60 Gew.-%.

Der pH-Wert der erfindungsgemäßen Dispersion liegt typischerweise zwischen 2 und 7, vorzugsweise zwischen 2,5 und 6.

Die Herstellung der erfindungsgemäßen Polyvinylesterdispersionen erfolgt nach dem oben beschriebenen erfindungsgemäßen Verfahren.

Dabei handelt es sich um eine radikalische Emulsionspolymerisation, die durch einen ausgewählten Schritt ii) modifiziert wurde.

Die radikalische Emulsionspolymerisation in Schritt i) kann in an sich bekannter Weise im Batchverfahren, im Zulaufverfahren, im kombinierten Batch/ZulaufVerfahren oder im kontinuierlichen Verfahren durchgeführt werden.

Vorzugsweise wird bei Schritt i) im kombinierten Batch/Zulauf-Verfahren oder besonders bevorzugt im Zulaufverfahren gearbeitet, wobei üblicherweise ein Teil der in Schritt i) eingesetzten Monomeren, beispielsweise 1 bis 15 Gew. %, zum Starten der Polymerisation vorgelegt werden. Die Dosierung der Monomere kann entweder zusammen oder in getrennten Zuläufen erfolgen. Weiterhin kann es vorteilhaft sein, in bestimmten Ausführungsformen zur Einstellung spezifischer Partikelgrößen- und -verteilungen zu Beginn von Schritt i) eine Saatpolymerisation durchzuführen.

Der zur Stabilisierung mitverwendete Emulgator und/oder das Schutzkolloid kann entweder zu Beginn von Schritt i) komplett vorgelegt werden oder partiell vorgelegt und partiell dosiert werden oder komplett während der Durchführung von Schritt i) zudosiert werden.

Die Polymerisationstemperatur während Schritt i) bewegt sich typischerweise im Bereich von 20 bis 120°C, vorzugsweise im Bereich von 30 bis 110°C und ganz besonders bevorzugt im Bereich von 45 bis 95°C.

Zum Starten der Polymerisation können die an sich bekannten Starter der radikalischen Polymerisation eingesetzt werden. Beispiele dafür sind Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen aliphatischen Carbonsäuren der Kettenlänge $C_8$-$C_{12}$, Tertiärbutyl-hydroperoxid, Ditertiärbutylperoxid, Diisopropylpercarbonat, Azoisobuttersäuredinitril, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Menthanhydroperoxid. Die vorgenannten Verbindungen können auch innerhalb eines Redoxsysteme verwendet werden, wobei Übergangsmetallsalze, wie Eisen-II-salze, oder andere Reduktionsmittel mitverwendet werden. Als Reduktionsmittel oder Regler können Alkalisalze der Oxymethansulfinsäure, Mercaptane der Kettenlänge $C_{10}$-$C_{14}$, Buten-(I)-ol-(3), Hydroxylaminsalze, Natriumdialkyldithiocarbamat, Natriumbisulfit, Ammoniumbisulfit, Natriumdithionit, Diisopropylxanthogendisulfid, Ascorbinsäure, Weinsäure, Isoascorbinsäure, Borsäure, Harnstoff und Ameisensäure mitverwendet werden.

Vorzugsweise werden jedoch wasserlösliche Persulfate, insbesondere Ammoniumpersulfat oder Natriumpersulfat zum Starten der Polymerisation verwendet.

Der in Schritt i) eingesetzte Starter für die Polymerisation kann entweder zu Beginn von Schritt i) komplett dem Reaktionsansatz zugesetzt werden oder partiell zugesetzt werden und partiell im Verlauf von Schritt i) dosiert werden oder komplett während der Durchführung von Schritt i) zudosiert werden.

Nach der vollständigen oder nahezu vollständigen Umsetzung von mindestens 90 %, vorzugsweise mindestens 95 % der in Schritt i) eingesetzten Monomeren wird Schritt ii) eingeleitet.

Dazu wird die Gesamtmenge der für die nächste Stufe des Polymerisationsverfahrens vorgesehenen Monomeren in reiner Form oder in Form einer Lösung zu dem in Schritt i) erhaltenen Polymerisationsgemisch gegeben. Auch in diesem Schritt kann die Dosierung der Monomere entweder zusammen oder in getrennten Zuläufen erfolgen. Die Zeitdauer für die Zugabe bewegt sich typischerweise im Bereich von 5 bis 60 Minuten, vorzugsweise von 15 bis 30 Minuten.

Die Temperatur des Reaktionsansatzes während Schritt ii) kann sich im Bereich der Temperatur am Ende von Schritt i) bewegen, vorzugsweise wird die Temperatur während Schritt ii) gegenüber der Temperatur am Ende von Schritt i) um bis zu 40°C abgesenkt.

Die Monomeren werden dem Reaktionsansatz in Schritt ii) in reiner Form oder in der Form von Lösungen in organischen Lösungsmitteln zugefügt. Bevorzugt werden die Monomeren dem Reaktionsansatz in flüssiger und reiner Form zugefügt.

Nach der Zugabe der Monomeren in Schritt ii) wird Schritt iii) durch Zugabe des Initiators eingeleitet. Dieses kann unmittelbar nach Beendigung von Schritt ii) erfolgen oder nach einer Ruhephase von beispielsweise 15 bis 120 Minuten. Es wird angenommen, dass sich die in Schritt ii) zugeführten Monomeren während der Durchführung von Schritt ii) und in der gegebenenfalls sich daran anschließenden Ruhephase in oder an den in der ersten Stufe erzeugten Polymerteilchen verteilen können.

Zum erneuten Starten der Polymerisation in Schritt iii) des erfindungsgemäßen Verfahrens können die an sich bekannten Starter der radikalischen Polymerisation eingesetzt werden. Beispiele dafür sind weiter oben bei der Beschreibung des Schrittes i) aufgeführt.

Auch in diesem Falle kann der in Schritt iii) eingesetzte Starter für die Polymerisation entweder zu Beginn von Schritt iii) komplett dem Reaktionsansatz zugesetzt werden oder partiell zugesetzt werden und partiell im Verlauf von Schritt iii) dosiert werden oder komplett während der Durchführung von Schritt iii) zudosiert werden.

Die Polymerisationstemperatur während Schritt iii) bewegt sich typischerweise im Bereich von 20 bis 120°C, vorzugsweise im Bereich von 30 bis 110°C und ganz besonders bevorzugt im Bereich von 45 bis 95°C.

Vor dem Starten der zweiten Stufe der Polymerisation empfiehlt es sich, die Temperatur des Reaktionsansatzes vor oder während der Zugabe des Starters zu erhöhen.

Nach Abschluss von Schritt iii) kann zur Entmonomerisierung eine weitere, vorzugsweise chemische Nachbehandlung, insbesondere mit Redoxkatalysatoren, wie zum Beispiel Kombinationen aus den obengenannten Oxidationsmitteln und Reduktionsmitteln angeschlossen werden. Weiterhin kann in bekannter Weise beispielsweise durch physikalische Entmonomerisierung, d.h. destillative Entfernung, insbesondere über Wasserdampfdestillation, oder durch Strippen mit einem Inertgas, vorhandenes Restmonomer entfernt werden. Besonders effizient ist eine Kombination aus physikalischen und chemischen Methoden, die eine Absenkung der Restmonomere auf sehr niedrige Gehalte (< 1000 ppm, vorzugsweise < 100 ppm) gestattet.

Die erfindungsgemäßen wässrigen Polyvinylesterdispersionen können als Bindemittel für Beschichtungsmittel aller Art einschließlich der Klebstoffe eingesetzt werden. Besonders bevorzugt kommen diese Polyvinylesterdispersionen als Alleinbindemittel zum Einsatz.

Der Anteil an Polymerdispersion im Beschichtungsmittel beträgt typischerweise 5 bis 50 Gew.-%, vorzugsweise 10 bis 50 Gew.-%, besonders bevorzugt 15 bis 30 Gew. %, bezogen auf den Gesamtfeststoffgehalt.

Die erfindungsgemäßen Polyvinylesterdispersionen werden beispielsweise als Bindemittel in Zubereitungen eingesetzt, die zur Beschichtung von Substraten dienen. Hierunter fallen beispielsweise kunstharzgebundene Putze, pastöse Fliesenkleber, pastöse Dichtmassen und pastöse Versiegelungsmassen, vorzugsweise für poröse Bauteile, sowie Papierstreichmassen insbesondere jedoch Anstrichmittel, wie z.B. Dispersionsfarben, Dispersionslacke und Lasuren.

Die oben beschriebenen Beschichtungsmittel enthalten das Bindemittel in der Regel als Alleinbindemittel. Das bedeutet, dass diese Beschichtungsmittel keine oder nur geringe Mengen an hydraulisch abbindenden Materialien aufweisen.

Die Erfindung betrifft auch diese Verwendungen.

Die erfindungsgemäße Polyvinylesterdispersion kann auch zur Herstellung von redispergierbaren Dispersionspulvern eingesetzt werden. Diese können in an sich bekannter Weise durch Versprühen der Polyvinylesterdispersion erzeugt werden.

Die nachfolgenden Beispiele dienen der Erläuterung der Erfindung. Die in den Beispielen angegebenen Teile und Prozente beziehen sich auf das Gewicht, soweit nicht anders vermerkt.

Vergleichsbeispiel 1: Herstellung einer Dispersion eines mit Vinylacetat-Ethylen-Copolymeren durch herkömmliche Copolymerisation

In eine Druckapparatur mit Rührer, Mantelheizung und Dosierpumpen wurde eine wässerige Lösung, bestehend aus folgenden Bestandteilen, eingegeben:

21525 g Wasser, 86 g Natriumacetat, 1440 g einer 70 Gew. %-igen wässerigen Lösung eines Oxoalkylethoxylats mit 28 Mol Ethylenoxid, 2167 g einer 10 Gew. %-igen wässerigen Polyvinylalkohollösung (Viskosität der 4 Gew. %-igen wässrigen Lösung 23 mPa* s) , 1127 g einer 15 Gew.% -igen Natriumlaurylsulfatlösung, 577 g einer 30 Gew. %-igen wässerigen Natriumvinylsulfonatlösung und 8 g einer 1 Gew. %-igen wässerigen Lösung von Fe-II(SO$_4$) x 7 H$_2$O. Der pH-Wert der Lösung betrug 7,2. Die Apparatur wurde von Luftsauerstoff befreit und es wurde Ethylen in die Apparatur gedrückt bis 20 bar Ethylendruck. Dann wurden 1640 g Vinylacetat eindosiert. Es wurde auf 60° C Innentemperatur erhitzt. Bei 35°C wurden 10% einer Lösung aus 30 g Brüggolit C in 2215 g Wasser eindosiert. Anschließend wurden 10% einer Lösung aus 42,8 g 70 Gew.%-igen wässerigen t-Butylhydroperoxid in 2215 g Wasser zudosiert wobei die Innentemperatur auf 60° C anstieg und es wurde zur Abführung der Reaktionswärme gekühlt. Eine Mischung aus 31065 g Vinylacetat und 72 g Vinyltrimethoxysilan (VTM) wurden zudosiert, wobei der Ethylendruck auf 40 bar gehalten wurde bis 1725 g Ethylen im Reaktor wurde.Gleichzeitig wurden die restlichen 90 % der Reduktions- und Initiatorlösung bei 60°C Innentemperatur zudosiert.

Danach wurde eine Lösung aus 36 g Natriumperoxodisulfat in 600 g Wasser zudosiert und die Innentemperatur auf 80°C erhöht und 1 Stunde bei dieser Temperatur gehalten.

Vergleichsbeispiel 2: Herstellung einer Dispersion eines mit 2-Ethylhexylacrylat modifizierten Vinylacetat-Ethylen-Copolymeren durch herkömmliche Copolymerisation

In eine Druckapparatur mit Rührer, Mantelheizung und Dosierpumpen wurde eine wässerige Lösung, bestehend aus folgenden Bestandteilen, eingegeben:

21525 g Wasser, 86 g Natriumacetat, 1440 g einer 70 Gew. %-igen wässerigen Lösung eines Oxoalkylethoxylats mit 28 Mol Ethylenoxid, 2167 g einer 10 Gew. %-igen wässerigen Polyvinylalkohollösung (Viskosität der 4 Gew. %-igen wässerigen Lösung 23 mPa*s), 1127 g einer 15 Gew. %-igen Natriumlaurylsulfatlösung, 577 g einer 30 Gew. %-igen wässerigen Natriumvinylsulfonatlösung und 8 g einer 1 Gew. %-igen wässerigen Lösung von Fe-II(SO$_4$) x 7 H$_2$O. Der

pH-Wert der Lösung betrug 7,2. Die Apparatur wurde von Luftsauerstoff befreit und es wurde Ethylen in die Apparatur gedrückt bis 20 bar Ethylendruck. Dann 5% des Gemisches aus 28440g Vinylacetat, 4500g 2-Ethylhexylacrylat und 63g Vinyltrimethoxysilan (VTM) eindosiert. Es wurde auf 60° C Innentemperatur erhitzt. Bei 35°C wurden 10% einer Lösung aus 30 g Brüggolit C in 2215 g Wasser eindosiert. Anschließend wurden 10% einer Lösung aus 42,8 g 70 Gew.%-igen wässerigen t-Butylhydroperoxid in 2215 g Wasser zudosiert wobei die Innentemperatur auf 60° C anstieg und es wurde zur Abführung der Reaktionswärme gekühlt. Die restlichen 95% der Monomermischung wurden zudosiert, wobei der Ethylendruck auf 40 bar gehalten wurde bis 1500 g Ethylen im Reaktor wurde. Gleichzeitig wurden die restlichen 90 % der Reduktions- und Initiatorlösung bei 60°C Innentemperatur zudosiert.

Danach wurde eine Lösung aus 36 g Natriumperoxodisulfat in 600 g Wasser zudosiert und die Innentemperatur auf 80°C erhöht und 1 Stunde bei dieser Temperatur gehalten.

Vergleichsbeispiel 3: Herstellung einer Dispersion eines mit VeoVa® 10 modifizierten Vinylacetat-Ethylen-Copolymeren durch herkömmliche Copolymerisation

Verfahren wie Vergleichsbeispiel 2 jedoch mit Monomermischung aus 29250g Vinylacetat, 3450g VeoVa® 10 und 72g Vinyltrimethoxysilan (VTM) und Zugabe von 1725g Ethylen.

Beispiel 1: Herstellung einer Dispersion eines mit 2-Ethylhexylacrylat modifizierten Vinylacetat-Ethylen-Copolymeren durch Einschlusspolymerisation

In eine Druckapparatur mit Rührer, Mantelheizung und Dosierpumpen wurde eine wässerige Lösung, bestehend aus folgenden Bestandteilen, eingegeben:

22700 g Wasser, 74 g Natriumacetat, 1240 g einer 70 Gew. %-igen wässerigen Lösung eines Oxoalkylethoxylats mit 28 Mol Ethylenoxid, 1860 g einer 10 Gew. %-igen wässerigen Polyvinylalkohollösung (Viskosität der 4 Gew. %-igen wässerigen Lösung 23 mPa*s) , 970 g einer 15 Gew. %-igen Natriumlaurylsulfatlösung, 500 g einer 30 Gew. %-igen wässerigen Natriumvinylsulfonatlösung und 7 g einer 1 Gew. %-igen wässerigen Lösung von Fe-II(SO$_4$) x 7 H$_2$O. Der pH-Wert der Lösung betrug 7,2. Die Apparatur wurde von Luftsauerstoff befreit und es wurde Ethylen in die Apparatur gedrückt bis 20 bar Ethylendruck. Dann wurden 1390 g Vinylacetat eindosiert. Es wurde auf 60° C Innentemperatur erhitzt. Bei 35°C wurden 10% einer Lösung aus 26 g Brüggolit C in 1900 g Wasser eindosiert. Anschließend wurden 10% einer Lösung aus 37 g 70 Gew.%-igen wässerigen t-Butylhydroperoxid in 1900 g Wasser zudosiert wobei die Innentemperatur auf 60° C anstieg und es wurde zur Abführung der Reaktionswärme gekühlt. Eine Mischung aus 26740 g Vinylacetat und 62 g Vinyltrimethoxysilan (VTM) wurden zudosiert, wobei der Ethylendruck auf 40 bar gehalten wurde bis 1483 g Ethylen im Reaktor waren. Gleichzeitig wurden die restlichen 90 % der Reduktions- und Initiatorlösung bei 60°C Innentemperatur zudosiert.

Danach wurde die Innentemperatur auf 80°C erhöht und 1 Stunde bei dieser Temperatur gehalten. Anschließend wurde auf 50°C abgekühlt, 4450 g 2-Ethylhexylacrylat zudosiert und die Innentemperatur eine weitere Stunde bei 50°C gehalten. Es wurde nun auf 85°C Innentemperatur erhitzt und eine Lösung aus 14,8 g Natriumperoxodisulfat in 590 g Wasser eindosiert. Die Innentemperatur wurde eine weitere Stunde bei 85°C gehalten und dann abgekühlt.

Beispiel 2: Herstellung einer Dispersion eines mit VeoVa® 10 modifizierten Vinylacetat-Ethylen-Copolymeren durch Einschlusspolymerisation

In eine Druckapparatur mit Rührer, Mantelheizung und Dosierpumpen wurde eine wässrige Lösung, bestehend aus folgenden Bestandteilen, eingegeben:

23000g Wasser, 78 g Natriumacetat, 1300 g einer 70 Gew. %-igen wässerigen Lösung eines Oxoalkylethoxylats mit 28 Mol Ethylenoxid, 1950 g einer 10 Gew. %-igen wässerigen Polyvinylalkohollösung (Viskosität der 4 Gew. %-igen wässerigen Lösung 23 mPa*s), 1010 g einer 15 Gew. %-igen Natriumlaurylsulfatlösung, 520 g einer 30 Gew. %-igen wässerigen Natriumvinylsulfonatlösung und 7 g einer 1 Gew. %-igen wässerigen Lösung von Fe-II(SO$_4$) x 7 H$_2$O. Der pH-Wert der Lösung betrug 7,2. Die Apparatur wurde von Luftsauerstoff befreit und es wurde Ethylen in die Apparatur gedrückt bis 20 bar Ethylendruck. Dann wurden 1450 g Vinylacetat eindosiert. Es wurde auf 60° C Innentemperatur erhitzt. Bei 35°C wurden 10% einer Lösung aus 27 g Brüggolit C in 2000 g Wasser eindosiert. Anschließend wurden 10% einer Lösung aus 39 g 70 Gew.%-igen wässerigen t-Butylhydroperoxid in 2000 g Wasser zudosiert wobei die Innentemperatur auf 60° C anstieg und es wurde zur Abführung der Reaktionswärme gekühlt. Eine Mischung aus 27910 g Vinylacetat und 65 g Vinyltrimethoxysilan (VTM) wurden zudosiert, wobei der Ethylendruck auf 40 bar gehalten wurde bis 1550 g Ethylen im Reaktor waren. Gleichzeitig wurden die restlichen 90 % der Reduktions- und Initiatorlösung bei 60°C Innentemperatur zudosiert.

Danach wurde die Innentemperatur auf 80°C erhöht und 1 Stunde bei dieser Temperatur gehalten. Anschließend wurde auf 50°C abgekühlt, 3100 g Veova 10 zudosiert und die Innentemperatur eine weitere Stunde bei 50°C gehalten.

Es wurde nun auf 85°C Innentemperatur erhitzt und eine Lösung aus 15,5 g Natriumperoxodisulfat in 620 g Wasser eindosiert. Die Innentemperatur wurde eine weitere Stunde bei 85°C gehalten und dann abgekühlt.

Beispiel 3: Herstellung einer Dispersion eines mit Methylmethacrylat modifizierten Vinylacetat-Ethylen-Copolymeren durch Einschlusspolymerisation

Es wurde wie bei Beispiel 1 verfahren; dabei wurde aber das 2-Ethylhexylacrylat durch 4450 g Methylmethacrylat ersetzt.

In der nachfolgenden Tabelle werden einige Kenndaten der hergestellten Dispersionen und der daraus hergestellten Filme beschrieben.

| Beispiel | Feststoff (%) | MFT (°C) | $T_g$-I (°C) | Aerosol $d_w$ (nm) | Siebrückstand (%) | Kontaktwinkel Dispersionsfilm (°) | Kontaktwinkel Farbfilm (°) |
|---|---|---|---|---|---|---|---|
| VB1 | 54,2 | 11 | 29,0 | 173 | 0,0008 | 33 | 42 |
| VB2 | 54,1 | 3 | 19,5 | 165 | 0,0085 | 39 | 62 |
| VB3 | 54,1 | 7 | 23,0 | 180 | 0,0012 | 47 | 63 |
| 1 | 52,8 | 6 | 29,6 | 214 | 0,0034 | 80 | 88 |
| 2 | 53,8 | 6 | 28,2 | 187 | 0,0029 | 55 | 94 |
| 3 | 53,5 | 12 | 32,2 | 192 | 0,0022 | 40 | n.b. |

Vergleichsbeispiel 4: Herstellung einer Dispersion eines Vinylacetat-Ethylen-Copolymeren durch herkömmliche Copolymerisation ohne Einsatz von Schutzkolloid

In eine Druckapparatur mit Rührer, Mantelheizung und Dosierpumpen wurde eine wässerige Lösung, bestehend aus folgenden Bestandteilen, eingegeben:

24000 g Wasser, 86 g Natriumacetat, 1465 g einer 70 Gew. %-igen wässerigen Lösung eines Oxoalkylethoxylats mit 28 Mol Ethylenoxid, 400 g eines 85 Gew.-%igen Na-Salz eines Sulfobernsteinsäureesters, 572 g einer 30 Gew. %-igen wässerigen Natriumvinylsulfonatlösung und 8 g einer 1 Gew. %-igen wässerigen Lösung von Fe-II($SO_4$) x 7 $H_2O$. Der pH-Wert der Lösung betrug 7,2. Die Apparatur wurde von Luftsauerstoff befreit und es wurde Ethylen in die Apparatur gedrückt bis 20 bar Ethylendruck. Dann wurden 1620 g Vinylacetat eindosiert. Es wurde auf 60° C Innentemperatur erhitzt. Bei 35°C wurden 10% einer Lösung aus 30 g Brüggolit C in 2215 g Wasser eindosiert. Anschließend wurden 10% einer Lösung aus 42,8 g 70 Gew.%-igen wässerigen t-Butylhydroperoxid in 2215 g Wasser zudosiert wobei die Innentemperatur auf 60° C anstieg und es wurde zur Abführung der Reaktionswärme gekühlt. Eine Mischung aus 30770 g Vinylacetat und 72 g Vinyltrimethoxysilan (VTM) wurden zudosiert, wobei der Ethylendruck auf 40 bar gehalten wurde bis 1710 g Ethylen im Reaktor waren. Gleichzeitig wurden die restlichen 90 % der Reduktions- und Initiatorlösung bei 60°C Innentemperatur zudosiert.

Danach wurde eine Lösung aus 36 g Natriumpersulfat in 600 g Wasser zudosiert und die Innentemperatur auf 80°C erhöht und 1 Stunde bei dieser Temperatur gehalten.

Vergleichsbeispiel 5: Herstellung einer Dispersion eines mit Methylmethacrylat modifizierten Vinylacetat-Ethylen-Copolymeren durch herkömmliche Copolymerisation ohne Einsatz von Schutzkolloid

In eine Druckapparatur mit Rührer, Mantelheizung und Dosierpumpen wurde eine wässrige Lösung, bestehend aus folgenden Bestandteilen, eingegeben:

24000 g Wasser, 86 g Natriumacetat, 1465 g einer 70 Gew. %-igen wässerigen Lösung eines Oxoalkylethoxylats mit 28 Mol Ethylenoxid, 400 g eines 85 gew.-%igen Na-Salz eines Sulfobernsteinsäureesters, 572 g einer 30 Gew. %-igen wässerigen Natriumvinylsulfonatlösung und 8 g einer 1 Gew. %-igen wässerigen Lösung von Fe-II($SO_4$) x 7 $H_2O$. Der pH-Wert der Lösung betrug 7,2. Die Apparatur wurde von Luftsauerstoff befreit und es wurde Ethylen in die Apparatur gedrückt bis 20 bar Ethylendruck. Dann wurden 5% des Gemisches aus 29450g Vinylacetat, 3110g Methylmethacrylat und 65g Vinyltrimethoxysilan (VTM) eindosiert. Es wurde auf 60° C Innentemperatur erhitzt. Bei 35°C wurden 10% einer Lösung aus 30 g Brüggolit C in 2215 g Wasser eindosiert. Anschließend wurden 10% einer Lösung aus 42,8 g 70 Gew.%-igen wässerigen t-Butylhydroperoxid in 2215 g Wasser zudosiert wobei die Innentemperatur auf 60° C anstieg und es wurde zur Abführung der Reaktionswärme gekühlt. Die restlichen 95% der Monomermischung wurden zudosiert, wobei der Ethylendruck auf 40 bar gehalten wurde bis 1550 g Ethylen im Reaktor waren. Gleichzeitig wurden die restlichen 90 % der Reduktions- und Initiatorlösung bei 60°C Innentemperatur zudosiert.

Danach wurde eine Lösung aus 36 g Natriumperoxodisulfat in 600 g Wasser zudosiert und die Innentemperatur auf 80°C erhöht und 1 Stunde bei dieser Temperatur gehalten.

Vergleichsbeispiel 6: Herstellung einer Dispersion eines mit Butylacrylat modifizierten Vinylacetat-Ethylen-Copolymeren durch herkömmliche Copolymerisation ohne Einsatz von Schutzkolloid

Es wurde wie bei Vergleichsbeispiel 5 verfahren; jedoch wurde eine Monomerenmischung aus 28170g Vinylacetat, 4460g Butylacrylat und 62g Vinyltrimethoxysilan (VTM) eingesetzt und es wurden 1487g Ethylen zugegeben.

Beispiel 4: Herstellung einer Dispersion eines mit Methylmethacrylat modifizierten Vinylacetat-Ethylen-Copolymeren durch Einschlusspolymerisation ohne Einsatz von Schutzkolloid

In eine Druckapparatur mit Rührer, Mantelheizung und Dosierpumpen wurde eine wässerige Lösung, bestehend aus folgenden Bestandteilen, eingegeben:

25300 g Wasser, 76 g Natriumacetat, 1313 g einer 70 Gew. %-igen wässerigen Lösung eines Oxoalkylethoxylats mit 28 Mol Ethylenoxid, 360 g eines 85 Gew.-%igen Na-Salzes eines Sulfobernsteinsäureesters, 513 g einer 30 Gew. %-igen wässerigen Natriumvinylsulfonatlösung und 7 g einer 1 Gew. %-igen wässerigen Lösung von Fe-II(SO$_4$) x 7 H$_2$O. Der pH-Wert der Lösung betrug 7,2. Die Apparatur wurde von Luftsauerstoff befreit und es wurde Ethylen in die Apparatur gedrückt bis 20 bar Ethylendruck. Dann wurden 1437 g Vinylacetat eindosiert. Es wurde auf 60° C Innentemperatur erhitzt. Bei 35°C wurden 10% einer Lösung aus 26,5 g Brüggolit C in 1960 g Wasser eindosiert. Anschließend wurden 10% einer Lösung aus 37,6 g 70 Gew.%-igen wässerigen t-Butylhydroperoxid in 1960 g Wasser zudosiert wobei die Innentemperatur auf 60° C anstieg und es wurde zur Abführung der Reaktionswärme gekühlt. Eine Mischung aus 27610 g Vinylacetat und 64 g Vinyltrimethoxysilan (VTM) wurden zudosiert, wobei der Ethylendruck auf 40 bar gehalten wurde bis 1532 g Ethylen im Reaktor waren. Gleichzeitig wurden die restlichen 90 % der Reduktions- und Initiatorlösung bei 60°C Innentemperatur zudosiert.

Danach wurde die Innentemperatur auf 80°C erhöht und 1 Stunde bei dieser Temperatur gehalten. Anschließend wurde auf 50°C abgekühlt, 3065 g Methylmethacrylat zudosiert und die Innentemperatur eine weitere Stunde bei 50°C gehalten. Es wurde nun auf 85°C Innentemperatur erhitzt und eine Lösung aus 15,3 g Natriumperoxodisulfat in 610 g Wasser eindosiert. Die Innentemperatur wurde eine weitere Stunde bei 85°C gehalten und dann abgekühlt.

Beispiel 5: Herstellung einer Dispersion eines mit Butylacrylat modifizierten Vinylacetat-Ethylen-Copolymeren durch Einschlusspolymerisation ohne Einsatz von Schutzkolloid

In eine Druckapparatur mit Rührer, Mantelheizung und Dosierpumpen wurde eine wässerige Lösung, bestehend aus folgenden Bestandteilen, eingegeben:

25500 g Wasser, 74 g Natriumacetat, 1260 g einer 70 Gew. %-igen wässerigen Lösung eines Oxoalkylethoxylats mit 28 Mol Ethylenoxid, 345 g eines 85 Gew.-%igen Na-Salz eines Sulfobernsteinsäureesters, 490 g einer 30 Gew. %-igen wässrigen Natriumvinylsulfonatlösung und 7 g einer 1 Gew. %-igen wässerigen Lösung von Fe-II(SO$_4$) x 7 H$_2$O. Der pH-Wert der Lösung betrug 7,2. Die Apparatur wurde von Luftsauerstoff und es wurde Ethylen in die Apparatur gedrückt bis 20 bar Ethylendruck. Dann wurden 1380 g Vinylacetat eindosiert. Es wurde auf 60° C Innentemperatur erhitzt. Bei 35°C wurden 10% einer Lösung aus 26 g Brüggolit C in 1900 g Wasser eindosiert. Anschließend wurden 10% einer Lösung aus 37 g 70 Gew.%-igen wässerigen t-Butylhydroperoxid in 1900 g Wasser zudosiert wobei die Innentemperatur auf 60° C anstieg und es wurde zur Abführung der Reaktionswärme gekühlt. Eine Mischung aus 26440 g Vinylacetat und 62 g Vinyltrimethoxysilan (VTM) wurden zudosiert, wobei der Ethylendruck auf 40 bar gehalten wurde bis 1467 g Ethylen im Reaktor waren. Gleichzeitig wurden die restlichen 90 % der Reduktions- und Initiatorlösung bei 60°C Innentemperatur zudosiert.

Danach wurde die Innentemperatur auf 80°C erhöht und 1 Stunde bei dieser Temperatur gehalten. Anschließend wurde auf 50°C abgekühlt, 4402 g Butylacrylat zudosiert und die Innentemperatur eine weitere Stunde bei 50°C gehalten. Es wurde nun auf 85°C Innentemperatur erhitzt und eine Lösung aus 14,7 g Natriumperoxodisulfat in 590 g Wasser eindosiert. Die Innentemperatur wurde eine weitere Stunde bei 85°C gehalten und dann abgekühlt.

Beispiel 6: Herstellung einer Dispersion eines mit Laurylacrylat modifizierten Vinylacetat-Ethylen-Copolymeren durch Einschlusspolymerisation ohne Einsatz von Schutzkolloid

Es wurde wie bei Beispiel 5 beschrieben verfahren; anstelle des Butylacrylats wurden 4402 g Laurylacrylat eingesetzt.

Vergleichsbeispiel 7: Herstellung einer Dispersion eines mit Laurylacrylat modifizierten Vinylacetat-Ethylen-Copolymeren durch Polymerisation gemäß US-A-4,616,057

Es wurden die Monomeren und Emulgatoren wie bei Beispiel 6 beschrieben eingesetzt. Die Polymerisation erfolgte in Analogie zum Beispiel 1 der US-A-4,616,057.

Beispiel 7: Herstellung einer Dispersion eines mit 2-Ethylhexylacrylat modifizierten Vinylacetat-Ethylen-Copolymeren durch Einschlusspolymerisation ohne Einsatz von Schutzkolloid

Es wurde wie bei Beispiel 5 beschrieben verfahren; anstelle von Butylacrylat wurden 4402g 2-Ethylhexylacrylat eingesetzt.

Beispiel 8: Herstellung einer Dispersion eines mit VeoVa® 10 modifizierten Vinylacetat-Ethylen-Copolymeren durch Einschlusspolymerisation ohne Einsatz von Schutzkolloid

Es wurde wie bei Beispiel 5 beschrieben verfahren; anstelle von Butylacrylat wurden 4402g Veova® 10 eingesetzt.

In der nachfolgenden Tabelle werden einige Kenndaten der hergestellten Dispersionen und der daraus hergestellten Filme beschrieben.

| Beispiel | Feststoff (%) | MFT (°C) | $T_g$-I (°C) | $T_g$-II (°C) | Aerosol $d_w$ (nm) | Siebrückstand (%) | Kontaktwinkel Dispersionsfilm (°) | Kontaktwinkel Farbfilm (°) |
|---|---|---|---|---|---|---|---|---|
| VB4 | 54,1 | 9 | 29,0 | - | 152 | 0,0008 | <5 | 20 |
| VB5 | 54,1 | 16 | 33,6 | - | 148 | 0,0027 | <5 | 30 |
| VB6 | 54,0 | 4 | 16,6 | - | 144 | 0,0006 | <5 | 45 |
| VB7 | 52,7 | - | 13,3 | - | 213 | 2,1453 | - | - |
| 4 | 53,4 | 11 | 28,8 | - | 168 | 0,0029 | <5 | 36 |
| 5 | 53,2 | 7 | 48,7 | 27,2 | 177 | 0,0018 | 64 | 75 |
| 6 | 50,8 | 7 | -0,2 | 29,9 | 177 | 0,0011 | 84 | - |
| 7 | 53 | 7 | 30,1 | - | 170 | 0,0028 | 87 | - |
| 8 | 53,3 | 6 | 275 | - | 174 | 0,0072 | 71 | - |

Filmbildungseigenschaften und mechanische Eigenschaften der erzeugten Filme

Aus den oben beschriebenen Dispersionen wurden Filme der Dicke von 0,65 mm hergestellt. Dazu wurde die betreffende Dispersion mit einer 1000 $\mu$m Rakel auf eine mit Teflon[R] beschichtete Glasplatte aufgezogen. Das Wasser wurde durch Stehenlassen bei Raumtemperatur verdunstet und der gebildete Film abgezogen. Die Ergebnisse sind in der folgenden Tabelle dargestellt.

Tabelle: Filmbildungseigenschaften und Eigenschaften der Filme

| Dispersion von Beispiel | Reißdehnung[1] (%) | Zugfestigkeit[1] (N/mM$^2$) | Kontaktwinkel[2] (°) | Mindestfilmbildetemperatur[3] (°C) |
|---|---|---|---|---|
| V4 | 334 | 10,7 | 20 | 9 |
| V5 | 196 | 13,4 | 30 | 16 |
| 4 | 234 | 16,7 | 36 | 11 |
| V6 | 640 | 5,5 | 45 | 4 |

(fortgesetzt)

| Dispersion von Beispiel | Reißdehnung[1) (%) | Zugfestigkeit[1)] (N/mM$^2$) | Kontaktwinkel[2)] (°) | Mindestfilmbildetemperatur[3)] (°C) |
|---|---|---|---|---|
| 5 | 638 | 11,1 | 75 | 7 |

[1)] ermittelt gemäß DIN 53455; Elongationsgeschwindigkeit: 100 mm/min

[2)] ermittelt gemäß folgender Vorschrift: Die Dispersion oder Farbe wurde auf einen Objektträger aufgerakelt und einen Tag bei Raumtemperatur getrocknet. Ein Wassertropfen wurde auf den Polymerfilm möglichst nah am Rand des Objektträgers mittels einer Spritze aufgebracht. Gemessen wurde der Kontaktwinkel direkt durch Anlagen der Tangente an das Tropfenprofil im Dreiphasenpunkt (fest/flüssig/gasförmig) mittels eines Goniometermikroskops.

[3)] Die Mindestfilmbildetemperatur ("MFT") ist diejenige Grenztemperatur, oberhalb der eine wässrige Kunststoffdispersion beim Trocknen unter festgelegten Bedingungen einen rissfreien Film bildet. Die MFT wurde mit einer Filmbildebank mit Kryostat (Fa. Coesfeld, Dortmund) bestimmt. Mit dem Filmziehlineal wurde eine Schichtdicke von 0,3 mm eingestellt.

## Patentansprüche

1. Verfahren zur Herstellung von Polyvinylesterdispersionen mit den Schritten

    i) Polymerisation von mindestens einem Vinylester einer gesättigten Carbonsäure und gegebenenfalls weiteren damit copolymerisierbaren Monomeren in Gegenwart von mindestens einem Emulgator und/oder mindestens einem Schutzkolloid bis zu einem Umsatz von mindestens 90 % der eingesetzten Monomeren,
    ii) Zugabe von mindestens einem sich von dem in Schritt i) eingesetzten Vinylester unterscheidenden radikalisch polymerisierbaren Monomer ausgewählt aus der Gruppe der Vinylaromaten, der Ester von ethylenisch ungesättigten Mono- oder Dicarbonsäuren oder der Vinylester von geradkettigen oder verzweigten aliphatischen gesättigten Carbonsäuren der Kettenlänge $C_5$-$C_{18}$ in reiner Form oder in Form einer Lösung zum in Schritt i) erhaltenen Polymerisationsgemisch, und
    iii) Zugabe von mindestens einem Initiator der radikalischen Polymerisation nach Beendigung der Zugabe des oder der Monomeren in Schritt ii), so dass das oder die in Schritt ii) zugesetzten Monomeren in Gegenwart der in Schritt i) erzeugten Dispersion polymerisiert werden,

    mit der Maßgabe, dass dass der Gehalt an Monomeren mit Säuregruppen und/oder mit Säureanhydridgruppen 6 Gew. %, bezogen auf die Gesamtmonomermenge, nicht übersteigt.

2. Verfahren nach Anspruch 1, **dadurch gekennzeichnet, dass** in Schritt i) Vinylacetat in Kombination mit weiteren Vinylestern von verzweigten und gesättigten $C_5$-$C_{12}$-Carbonsäuren und/oder mit $\alpha$-Olefinen, vorzugsweise mit Ethylen, eingesetzt wird.

3. Verfahren nach Anspruch 1, **dadurch gekennzeichnet, dass** in Schritt ii) mindestens ein Monomer ausgewählt aus der Gruppe der Vinylaromaten, der Ester von ethylenisch ungesättigten Monocarbonsäuren mit einwertigen aliphatischen gesättigten Alkoholen, der Diester von ethylenisch ungesättigten Dicarbonsäuren mit einwertigen aliphatischen gesättigten Alkoholen oder der Vinylester von geradkettigen oder verzweigten aliphatischen gesättigten Carbonsäuren der Kettenlänge $C_5$-$C_{18}$ eingesetzt wird, vorzugsweise mindestens ein Acrylat und/oder ein Methacrylat und/oder ein Vinylester einer verzweigten und gesättigten $C_5$-$C_{12}$-Carbonsäure.

4. Verfahren nach einem der Ansprüche 1 bis 3, **dadurch gekennzeichnet, dass** die Polymerisation in Schritt i) bei Temperaturen zwischen 60 und 120°C durchgeführt wird, dass die Temperatur des Polymerisationsgemisches vor der Zugabe des oder der Monomeren in Schritt ii) auf unterhalb von 60°C gesenkt wird, und dass zwischen Beendigung der Zugabe des oder der Monomeren in Schritt ii) und Zugabe des Polymerisationsinitiators in Schritt iii) die Temperatur bei weniger als 60°C gehalten wird.

5. Verfahren nach Anspruch 4, **dadurch gekennzeichnet, dass** die Temperatur des Polymerisationsgemisches zu Beginn von Schritt iii) auf 60 bis 120°C erhöht wird.

6. Polyvinylesterdispersionen erhältlich nach dem Verfahren nach einem der Ansprüche 1 bis 5.

**7.** Polyvinylesterdispersion nach Anspruch 6, **dadurch gekennzeichnet, dass** die mehrstufig hergestellte Polyvinylesterdispersion einen auf die Polyvinylesterdispersion bezogenen Siebrückstand, gemessen mit einem 40 μm Sieb, von weniger als 0,05 Gew. %, aufweist.

**8.** Polyvinylesterdispersion nach einem der Ansprüche 6 bis 8, **dadurch gekennzeichnet, dass** der Kontaktwinkel zwischen Wasser und den aus der Polyvinylesterdispersion erzeugten Filmen mindestens 10 % größer ist als der Kontaktwinkel zwischen Wasser und Filmen, die aus einstufig hergestellten Polyvinylesterdispersionen gleicher Monomerzusammensetzung erzeugt worden sind.

**9.** Polyvinylesterdispersion nach einem der Ansprüche 6 bis 8, **dadurch gekennzeichnet, dass** der Gehalt des Copolymers an einpolymerisierten Säuren und/oder Säureanhydriden 3 Gew. %, bezogen auf die Gesamtmonomermenge, nicht übersteigt.

**10.** Polyvinylesterdispersion nach einem der Ansprüche 6 bis 9, **dadurch gekennzeichnet, dass** diese einen Gehalt an Emulgatoren von bis zu 5,0 Gew. %, besonders bevorzugt von weniger als 3,65 Gew. % aufweist, bezogen auf die Gesamtmasse an eingesetzten Monomeren.

**11.** Polyvinylesterdispersion nach Anspruch 6, **dadurch gekennzeichnet, dass** diese keine oder bis zu 3,65 Gew. % Emulgatoren enthält und zusätzlich durch weniger als 1 Gew. %, bezogen auf den Gesamtmonomergehalt, an Schutzkolloid stabilisiert ist.

**12.** Polyvinylesterdispersion nach einem der Ansprüche 6 bis 11, **dadurch gekennzeichnet, dass** das Polymer Struktureinheiten enthält, die sich ableiten von Vinylacetat und gegebenenfalls von weiteren Vinylestern von verzweigten und gesättigten $C_5$-$C_{12}$-Carbonsäuren und/oder von $\alpha$-Olefinen, vorzugsweise von Ethylen.

**13.** Polyvinylesterdispersion nach Anspruch 12, **dadurch gekennzeichnet, dass** diese ein Polymer mit Struktureinheiten enthält, die sich ableiten von Acrylat und/oder Methacrylat und/oder Vinylester einer verzweigten und gesättigten $C_5$-$C_{12}$-Carbonsäure.

**14.** Polyvinylesterdispersion nach einem der Ansprüche 6 bis 13, **dadurch gekennzeichnet, dass** diese ein Polymer mit Struktureinheiten enthält, die sich ableiten von mindestens einem Monomeren ausgewählt aus der Gruppe der ethylenisch ungesättigten Silangruppen enthaltenden Monomeren, der ethylenisch ungesättigten Epoxidgruppen enthaltenden Monomeren, der ethylenisch ungesättigten Carbonsäure-, Sulfonsäure- Phosphorsäure- oder Phosphonsäuregruppen enthaltenden Monomeren oder deren Salzen, oder der Gemische von mindestens zwei dieser Monomeren.

**15.** Verwendung der Polyvinylesterdispersionen nach einem der Ansprüche 6 bis 14 zur Herstellung von Beschichtungsmitteln zum Beschichten von Substraten aller Art.

**16.** Verwendung der Polyvinylesterdispersionen nach einem der Ansprüche 6 bis 14 zur Herstellung von redispergierbaren Dispersionspulvern.

**Claims**

**1.** A process for preparing polyvinyl ester dispersions, comprising the steps of

i) polymerizing at least one vinyl ester of a saturated carboxylic acid and optionally further monomers copolymerizable therewith in the presence of at least one emulsifier and/or at least one protective colloid up to a conversion of at least 90% of the monomers used,

ii) adding at least one free-radically polymerizable monomer other than the vinyl ester used in step i), selected from the group of the vinylaromatics, the esters of ethylenically unsaturated mono- or dicarboxylic acids and the vinyl esters of straight-chain or branched aliphatic saturated carboxylic acids of chain length $C_5$-$C_{18}$, in pure form or in the form of a solution to the polymerization mixture obtained in step i), and

iii) adding at least one initiator of free-radical polymerization after the addition of the monomer(s) in step ii) has ended, such that the monomer(s) added in step ii) are polymerized in the presence of the dispersion obtained in step i),

with the proviso that the content of monomers with acid groups and/or with acid anhydride groups does not exceed 6% by weight, based on the total amount of monomers.

2.  The process as claimed in claim 1, wherein vinyl acetate is used in step i) in combination with further vinyl esters of branched and saturated $C_5$-$C_{12}$-carboxylic acids and/or with $\alpha$-olefins, preferably with ethylene.

3.  The process as claimed in claim 1, wherein at least one monomer selected from the group of the vinylaromatics, the esters of ethylenically unsaturated monocarboxylic acids with monohydric aliphatic saturated alcohols, the diesters of ethylenically unsaturated dicarboxylic acids with monohydric aliphatic saturated alcohols and the vinyl esters of straight-chain or branched aliphatic saturated carboxylic acids of chain length $C_5$-$C_{18}$ is used in step ii), preferably at least one acrylate and/or a methacrylate and/or a vinyl ester of a branched and saturated $C_5$-$C_{12}$-carboxylic acid.

4.  The process as claimed in any one of claims 1 to 3, wherein the polymerization in step i) is carried out at temperatures between 60 and 120°C, the temperature of the polymerization mixture before the addition of the monomer(s) in step ii) is lowered to below 60°C, and, between the end of the addition of the monomer(s) in step ii) and addition of the polymerization initiator in step iii), the temperature is kept at less than 60°C.

5.  The process as claimed in claim 4, wherein the temperature of the polymerization mixture at the start of step iii) is increased to from 60 to 120°C.

6.  A polyvinyl ester dispersion obtainable by the process as claimed in any one of claims 1 to 5.

7.  The polyvinyl ester dispersion as claimed in claim 6, wherein the polyvinyl ester dispersion prepared in a multistage process has a screen residue based on the polyvinyl ester dispersion, measured with a 40 $\mu$m screen, of less than 0.05% by weight.

8.  The polyvinyl ester dispersion as claimed in any one of claims 6 to 8, wherein the contact angle between water and the films obtained from the polyvinyl ester dispersion is at least 10% greater than the contact angle between water and films which have been obtained from polyvinyl ester dispersions of the same monomer composition prepared in a one-stage process.

9.  The polyvinyl ester dispersion as claimed in any one of claims 6 to 8, wherein the content in the copolymer of polymerized acids and/or acid anhydrides does not exceed 3% by weight, based on the total amount of monomers.

10. The polyvinyl ester dispersion as claimed in any one of claims 6 to 9, which has a content of emulsifiers of up to 5.0% by weight, more preferably of less than 3.65% by weight, based on the total mass of monomers used.

11. The polyvinyl ester dispersion as claimed in claim 6, which comprises no or up to 3.65% by weight of emulsifiers and is additionally stabilized by less than 1% by weight, based on the total monomer content, of protective colloid.

12. The polyvinyl ester dispersion as claimed in any one of claims 6 to 11, wherein the polymer contains structural units which derive from vinyl acetate and optionally from further vinyl esters of branched and saturated $C_5$-$C_{12}$-carboxylic acids and/or from $\alpha$-olefins, preferably from ethylene.

13. The polyvinyl ester dispersion as claimed in claim 12, which comprises a polymer having structural units which derive from acrylate and/or methacrylate and/or vinyl ester of a branched and saturated $C_5$-$C_{12}$-carboxylic acid.

14. The polyvinyl ester dispersion as claimed in any one of claims 6 to 13, which comprises a polymer with structural units which derive from at least one monomer selected from the group of the monomers containing ethylenically unsaturated silane groups, the monomers containing ethylenically unsaturated epoxide groups, the monomers containing ethylenically unsaturated carboxylic acid, sulfonic acid, phosphoric acid or phosphonic acid groups or salts thereof, or the mixtures of at least two of these monomers.

15. The use of the polyvinyl ester dispersions as claimed in any one of claims 6 to 14 for producing coating compositions for coating substrates of all kinds.

16. The use of the polyvinyl ester dispersions as claimed in any one of claims 6 to 14 for producing redispersible dispersion powders.

**Revendications**

1. Procédé de fabrication de dispersions d'esters de polyvinyle, comprenant les étapes suivantes :

   i) polymérisation d'au moins un ester de vinyle d'un acide carboxylique saturé et, le cas échéant, d'autres monomères copolymérisables avec celui-ci en présence d'au moins un émulsifiant et/ou d'au moins un colloïde de protection jusqu'à une conversion d'au moins 90 % des monomères utilisés,
   ii) ajout d'au moins un monomère polymérisable par voie radicalaire différent de l'ester de vinyle utilisé à l'étape i), sélectionné parmi le groupe composé des vinylaromates, des esters d'acides mono- ou dicarboxyliques éthyléniquement insaturés ou des esters de vinyle d'acides carboxyliques aliphatiques saturés en chaîne linéaire ou ramifiés de longueur de chaîne $C_5$ à $C_{18}$ sous forme pure ou sous forme de solution au mélange de polymérisation obtenu à l'étape i), et
   iii) ajout d'au moins un initiateur de polymérisation radicalaire après la fin de l'ajout du ou des monomères à l'étape ii), de façon que le ou les monomères ajoutés à l'étape ii) soient polymérisés en présence de la dispersion produite à l'étape i),

   à la condition que la teneur en monomères avec des groupes acides et/ou avec des groupes anhydrides d'acides ne dépasse pas 6 % en poids par rapport à la quantité totale de monomères.

2. Procédé selon la revendication 1, **caractérisé en ce qu'**à l'étape i), on utilise de l'acétate de vinyle en combinaison avec d'autres esters de vinyle d'acides carboxyliques $C_5$ à $C_{12}$ ramifiés et saturés et/ou avec des $\alpha$-oléfines, de préférence de l'éthylène.

3. Procédé selon la revendication 1, **caractérisé en ce qu'**à l'étape ii), on utilise au moins un monomère sélectionné parmi le groupe composé des vinylaromates, des esters d'acides monocarboxyliques éthyléniquement insaturés avec des alcools monovalents aliphatiques saturés, des diesters d'acides dicarboxyliques éthyléniquement insaturés avec des alcools monovalents aliphatiques saturés ou des esters de vinyle d'acides carboxyliques aliphatiques saturés en chaîne linéaire ou ramifiés de longueur de chaîne $C_5$ à $C_{18}$, de préférence au moins un acrylate et/ou un méthacrylate et/ou un ester de vinyle d'un acide carboxylique $C_5$ à $C_{12}$ ramifié et saturé.

4. Procédé selon l'une des revendications 1 à 3, **caractérisé en ce que** la polymérisation à l'étape i) est effectuée à des températures comprises entre 60 et 120 °C, que la température du mélange de polymérisation avant l'ajout du ou des monomères à l'étape ii) est abaissée au-dessous de 60 °C et qu'entre la fin de l'ajout du ou des monomères à l'étape ii) et l'ajout de l'initiateur de polymérisation à l'étape iii), la température est maintenue à moins de 60 °C.

5. Procédé selon la revendication 4, **caractérisé en ce que** la température du mélange de polymérisation est élevée de 60 à 120 °C au début de l'étape iii).

6. Dispersions d'esters de polyvinyle pouvant être obtenues selon le procédé selon l'une des revendications 1 à 5.

7. Dispersion d'esters de polyvinyle selon la revendication 6, **caractérisée en ce que** la dispersion d'esters de polyvinyle réalisée en plusieurs étapes présente un résidu de tamisage rapporté à la dispersion d'esters de polyvinyle, mesuré avec un tamis de 40 $\mu$m, de moins de 0,05 % en poids.

8. Dispersion d'esters de polyvinyle selon l'une des revendications 6 à 8, **caractérisée en ce que** l'angle de contact entre l'eau et les films produits à partir de la dispersion d'esters de polyvinyle est supérieur d'au moins 10 % à l'angle de contact entre l'eau et des films qui ont été produits à partir de dispersions d'esters de polyvinyle de même composition monomérique réalisées en une étape.

9. Dispersion d'esters de polyvinyle selon l'une des revendications 6 à 8, **caractérisée en ce que** la teneur du copolymère en acides et/ou anhydrides d'acides incorporés par polymérisation ne dépasse pas 3 % en poids par rapport à la quantité totale de monomères.

10. Dispersion d'esters de polyvinyle selon l'une des revendications 6 à 9, **caractérisée en ce que** celle-ci présente une teneur en émulsifiants pouvant aller jusqu'à 5,0 % en poids, particulièrement de préférence inférieure à 3,65 % en poids par rapport à la masse totale des monomères utilisés.

11. Dispersion d'esters de polyvinyle selon la revendication 6, **caractérisée en ce que** celle-ci ne contient pas ou seulement jusqu'à 3,65 % en poids d'émulsifiants et est stabilisée par moins de 1 % en poids, par rapport à la teneur totale en monomères, de colloïde de protection.

12. Dispersion d'esters de polyvinyle selon l'une des revendications 6 à 11, **caractérisée en ce que** le polymère contient des unités structurales qui dérivent de l'acétate de vinyle et, le cas échéant, d'autres esters de vinyle d'acides carboxyliques $C_5$ à $C_{12}$ ramifiés et saturés et/ou d'$\alpha$-oléfines, de préférence d'éthylène.

13. Dispersion d'esters de polyvinyle selon la revendication 12, **caractérisée en ce que** celle-ci contient un polymère avec des unités structurales qui dérivent de l'acrylate et/ou du méthacrylate et/ou d'un ester de vinyle d'un acide carboxylique $C_5$ à $C_{12}$ ramifié et saturé.

14. Dispersion d'esters de polyvinyle selon l'une des revendications 6 à 13, **caractérisée en ce que** celle-ci contient un polymère avec des unités structurales qui dérivent d'au moins un monomère sélectionné parmi le groupe composé des monomères contenant des groupes silane éthyléniquement insaturés, des monomères contenant des groupes époxyde éthyléniquement insaturés, des monomères contenant des groupes acide carboxylique, acide sulfonique, acide phosphorique ou acide phosphonique éthyléniquement insaturés ou de leurs sels, ou des mélanges d'au moins deux de ces monomères.

15. Utilisation des dispersions d'esters de polyvinyle selon l'une des revendications 6 à 14 pour fabriquer des moyens de revêtement pour le revêtement de substrats de toute nature.

16. Utilisation des dispersions d'esters de polyvinyle selon l'une des revendications 6 à 14 pour fabriquer des poudres de dispersion redispersibles.

**IN DER BESCHREIBUNG AUFGEFÜHRTE DOKUMENTE**

**In der Beschreibung aufgeführte Patentdokumente**

- EP 710675 A
- EP 381122 A
- US 4616057 A
- EP 581264 A
- DE 10126560 C1

**In der Beschreibung aufgeführte Nicht-Patentliteratur**

- **P.A. LOWELL.** Emulsion Polymerization and Emulsion Polymers. Wiley, 1997, 26-31